(19) Europäisches Patentamt
European Patent Office
Office européen des brevets

(11) **EP 4 109 007 B1**

(12) **EUROPEAN PATENT SPECIFICATION**

(45) Date of publication and mention
of the grant of the patent:
**06.08.2025 Bulletin 2025/32**

(21) Application number: **22181042.7**

(22) Date of filing: **24.06.2022**

(51) International Patent Classification (IPC):
**F24F 11/64** *(2018.01)* **F24F 11/74** *(2018.01)*
**F24F 110/10** *(2018.01)* **F24F 11/77** *(2018.01)*

(52) Cooperative Patent Classification (CPC):
**F24F 11/64; F24F 11/74; F24F 11/77;**
F24F 2110/10; Y02B 30/70

(54) **ADAPTIVE CONTROL SYSTEM FOR CONTROLLING THE THERMAL COMFORT INSIDE AN ENVIRONMENT AND METHOD THEREOF**

ADAPTIVES STEUERSYSTEM ZUR STEUERUNG DES WÄRMEKOMFORTS INNERHALB EINER UMGEBUNG UND VERFAHREN DAFÜR

SYSTEME DE REGULATION ADAPTATIVE POUR LE CONTROLE DU CONFORT THERMIQUE A L'INTERIEUR D'UN ENVIRONNEMENT ET PROCEDE ASSOCIE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **25.06.2021 IT 202100016754**

(43) Date of publication of application:
**28.12.2022 Bulletin 2022/52**

(73) Proprietor: **COOL TECH S.R.L.**
**00143 Roma (IT)**

(72) Inventors:
• **LA MOTTA, Maurizio**
**Roma (IT)**
• **RUTA, Giovanni**
**Roma (IT)**
• **ZANTOMIO, Simone**
**Roma (IT)**
• **CASCELLA, Giuseppe Leonardo**
**Roma (IT)**
• **CASCELLA, Davide**
**Roma (IT)**
• **UVA, Antonio Emmanuele**
**Roma (IT)**

(74) Representative: **Ferriero, Paolo et al**
**Barzanò & Zanardo Roma S.p.a.**
**Via Piemonte 26**
**00187 Roma (IT)**

(56) References cited:
EP-A1- 3 511 639 WO-A1-2018/082103
JP-A- H05 264 086 US-A1- 2019 353 377

• **REVEL G M ET AL: "Paper;Development and experimental evaluation of a thermography measurement system for real-time monitoring of comfort and heat rate exchange in the built environment;Development and experimental evaluation of a thermography measurement system for real-time monitoring of comfort and heat rate exchan", MEASUREMENT SCIENCE AND TECHNOLOGY, IOP, BRISTOL, GB, vol. 23, no. 3, 1 February 2012 (2012-02-01), pages 35005, XP020219569, ISSN: 0957-0233, DOI: 10.1088/ 0957-0233/23/3/035005**
• **ALLEN WILLIAM HAND ET AL: "Fuzzy Neural Network-Based Health Monitoring for HVAC System Variable-Air-Volume Unit", IEEE TRANSACTIONS ON INDUSTRY APPLICATIONS, IEEE SERVICE CENTER, PISCATAWAY, NJ, US, vol. 52, no. 3, 1 May 2016 (2016-05-01), pages 2513 - 2524, XP011610279, ISSN: 0093-9994, [retrieved on 20160518], DOI: 10.1109/ TIA.2015.2511160**

EP 4 109 007 B1

**Description**

The present invention relates to an adaptive control system for controlling the thermal comfort inside an environment.

In particular, said environment can be a working environment or a domestic environment and the present invention refers to an adaptive control system designed to control the level of thermal comfort based on the needs of a user positioned within said environment.

More specifically, the control of the level of thermal comfort perceived by a user inside said environment is based on the acquisition and processing of a plurality of data (for example data relating to the internal temperature of said environment and to the temperature variation) and based on parameters set by the user.

## Prior art

The expression *"thermal comfort"* means *"the psychophysical state in which a subject expresses satisfaction with the thermal environment"*, i.e. said subject has neither the sensation of heat nor the sensation of cold.

This psychophysical state is fundamental for a person's health and personal satisfaction can lead to well-being in the home, as well as better productivity in a work environment.

For practical reasons, in winter it is advisable to set the internal temperature between 21 °C and 23 °C, while in summer it is advisable to set a higher temperature than the one set for the winter to reduce the passage of heat from the outside towards the internal in order to save energy.

These temperature settings have been confirmed to meet the needs of 80% of people and are recommended by the American Society of Heating Refrigerating and Air Conditioning Engineers (ASHRAE).

The control of HVAC (Heating, Ventilation and Air Conditioning) systems is directed to improve the quality of an indoor environment, increasing thermal comfort and reducing energy consumption.

The use of ON-OFF controllers or the use of PID controllers is known to regulate the operations of an HVAC system.

The ON-OFF regulators are intuitive and simple and regulate a temperature differential between two predetermined values with respect to a desired internal temperature of the environment: a predetermined first value and a predetermined second value, greater than said predetermined first value.

However, a disadvantage of the use of these ON-OFF regulators is due to the fact that the thermal comfort control through said ON-OFF regulators is subject to a wide fluctuation in temperature.

Moreover, a further disadvantage is given by the fact that it is not possible to control the thermal comfort with time delays by means of these ON-OFF regulators.

These ON-OFF controllers regulate thermal comfort using the internal temperature measured moment by moment by temperature sensors placed in the environment, without taking into account additional information, such as climate change or the heat exchange of the building.

The use of PID controllers (Proportional-Integrative-Derivative) allows an accurate thermal comfort control, using a dynamic error related to the temperature, which is the variable to be controlled.

However, a disadvantage is that it is necessary that said PID controllers are frequently calibrated with respect to the environmental conditions.

A common disadvantage to the use of ON-OFF controllers and PID controllers is that, due to the ability of a building to store heat, the HVAC systems controlled by the aforementioned controllers respond to changes in internal temperature with considerable delays.

This can cause a cooling or overheating of the environment of a building, and consequently a higher energy consumption.

Due to the different influences on the general quality of the indoor environment, the control system of an HVAC must correlate input variables to output variables.

For this reason, the control system has numerous elements of uncertainty.

A further known type control system for controlling thermal comfort comprises one or more microclimatic control units, each of which is able to acquire a plurality of environmental parameters (such as, for example, the air temperature, the surface temperature, the temperature of liquids and fumes, the radiant temperature, the relative humidity, the atmospheric and differential pressure, the air velocity, the illumination, the solar radiation and the radiant asymmetry, the thermal flow, the gas concentration and any meteorological quantities) and a logic control unit configured to apply subjective parameters, and to provide as output the value of a PMV (*Predicted Mean Vote*) index concerning the position in which said microclimatic control units are installed.

The PMV index is one of the main indicators according to the UNI EN ISO 7730 standard of the thermal comfort of an indoor environment.

This index predicts the average response (in statistical terms) of the thermal sensation of a large part of people exposed to certain thermal conditions for long time periods.

The classic formula with which it is possible to calculate the PMV index was presented by Fanger in 1972 and depends on six variables:

i. the metabolic rate,
ii. the insulation provided by clothes,
iii. the temperature of the indoor environment,
iv. the humidity of the indoor environment,
v. the speed of the air,
vi. the mean radiant temperature.

According to a sensitivity analysis published in G. M. Revel, E. Sabbatini, and M. Arnesano, "Development and experimental evaluation of a thermography measurement system for real-time monitoring of comfort and heat rate exchange in the built environment" Measurement Science and Technology , vol. 23, no. 3, 2012., the most influential variables are the metabolic rate, the temperature of the indoor environment and the humidity of the indoor environment.

Without loss of generality, human activities and variables related to clothing can be estimated based on the ISO-7730 standard.

According to these hypotheses, the final formula of PMV can be a nonlinear function of measurable environmental variables (at least temperature and humidity).

Currently, the known control systems through which it is possible to manage the level of thermal comfort mainly use control techniques based on the use of PID controllers or control techniques aimed at optimally limiting energy consumption.

Some known control systems may comprise one or more NEST thermostats, i.e. a programmable thermostat that requires the configuration of parameters based on user preferences, or one or more KNX thermostats that require data from devices / systems that use the same communication protocol.

Patent document US-2019/353377-A1 describes a control system adapted for controlling at least one air conditioning unit and comprising temperature sensors, a user interface module and a control unit to acquire temperature data.

**Aim of the invention**

The aim of the present invention is to overcome said disadvantages by providing an adaptive control system to control thermal comfort in an environment, in which said control system has a simple structure and operation (with respect to the complexity of the functions used and the calculations that the control systems of known types must be carried out to regulate thermal comfort) and is able to control thermal comfort in a fine manner.

A second aim of the present invention is to provide a control system for controlling thermal comfort, also reducing energy consumption.

A further aim of the present invention is to provide a versatile control system both for a user (so that the user can preferably be an active part in choosing the level of thermal comfort) and for an operator. In fact, this control system offers a user the possibility of customizing some parameters and an operator the possibility of carrying out maintenance in a simple way.

**Object of the invention**

It is therefore object of the invention an adaptive control system according to claim 1.

Further embodiments of the control system are disclosed in the dependent claims.

It is object of the invention also an air conditioning unit comprising said adaptive control system.

It is object of the invention also a method for controlling the thermal comfort inside an environment through said control system.

**Figure list**

The present invention will be now described, for illustrative, but not limitative purposes, according to its embodiment, making particular reference to the enclosed figures, wherein:

Figure 1 is a schematic view of an adaptive control system for controlling the thermal comfort level of an environment according to the invention, wherein said control system comprises a control logic unit and a user interface module associated with an air conditioning unit arranged in said environment, in which the logic control unit is configured to communicate with said user interface module and with said air conditioning unit;

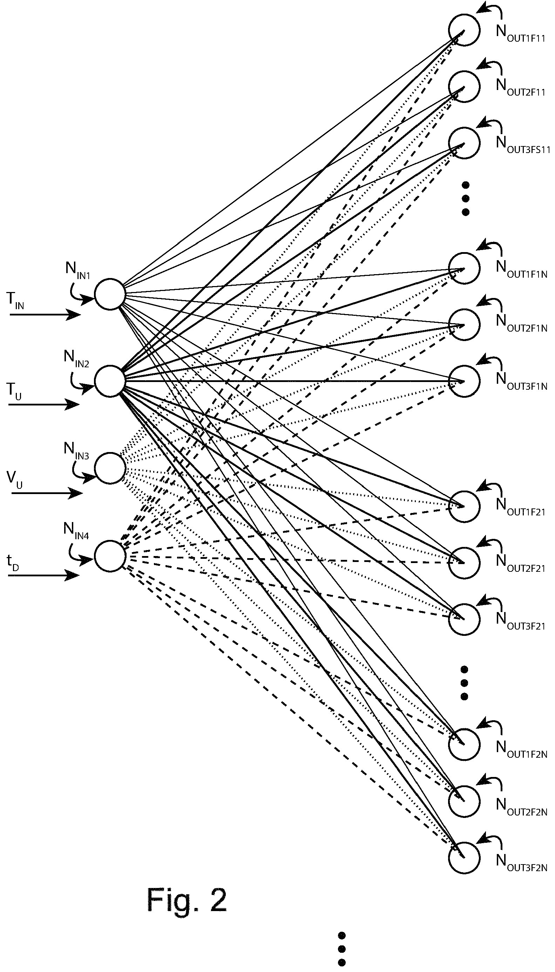

Figure 2 is a schematic view of a first part of a neural network showing four input nodes and some groups of output nodes;

Figure 3 is a schematic view of a second part of the neural network showing the remaining groups of output nodes (and the input nodes shown in Figure 2 are again shown).

## Detailed description of the invention

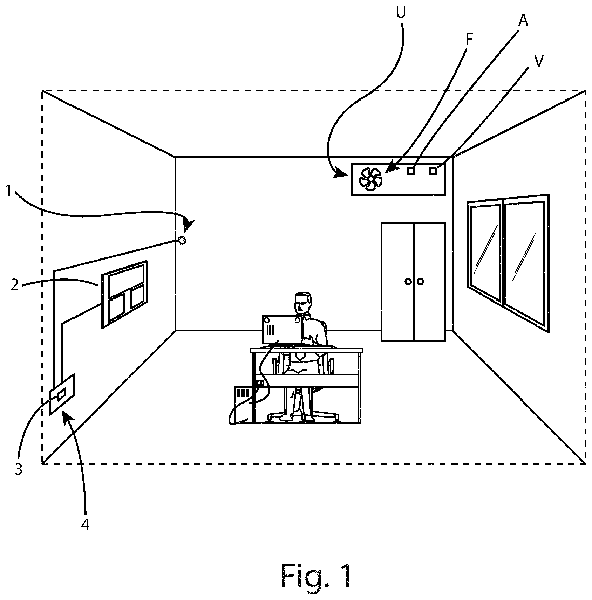

With reference to Figure 1, an adaptive control system for controlling the thermal comfort inside an environment.

In the embodiment being disclosed, an air conditioning unit U is arranged inside said environment.

An air conditioning unit U comprising a fan F, adjusting means A for adjusting the speed of said fan F, control valve V for controlling the flow rate of a thermovector fluid over time.

The control system comprises:

- temperature detecting means 1, to be installed in said environment, configured to detect a respective value of internal temperature $T_{INi}$ of said environment for a plurality of predetermined time periods $\Delta t_{REFi}$, with i=1,...,N, wherein N is a positive integer,
- a user interface module 2 configured to allow a user to select at least one temperature value $T_U$ and a speed value $V_U$ of the fan F,
- storage means 3, and
- a logic control unit 4 connected to said temperature detecting means 1, to said user interface module 2, and to said storage means 3.

In the embodiment being disclosed, said temperature detecting means 1 comprise a temperature sensor.

Furthermore, said storage means 3 comprise a memory.

In particular, the memory is arranged inside said logic control unit 4.

However, it is not necessary that the memory is arranged inside said logic control unit 4.

Furthermore, the logic control unit is configured to:

○ acquire a value of internal temperature $T_{INi}$ from said temperature detecting means 1 for a respective predetermined time period $\Delta t_{REFi}$, as well as a temperature value $T_U$ and a speed value $V_U$ from said user interface module 2,

○ calculate one or more values of temperature variations $\delta T_{Dj}$, with j=1,...,M, wherein M is a positive integer and j is the number of predetermined time periods, and wherein each value of temperature variation $\delta T_{Dj}$ is obtained by the subtraction between the value of internal temperature $T_{INi}$ in a predetermined time period and the value of internal temperature $T_{INi-1}$ in the previous predetermined time period;

○ store in said storage means 3:

the values of internal temperature $T_{INi}$ referred to at least two predetermined time periods $\Delta t_{REFi}$ and said one or more values of temperature variation $\delta T_{Dj}$, as well as said temperature value $T_U$ and said speed value $V_U$,

a first group of fuzzy sets F1 comprising a plurality of fuzzy sets $F1_1, F1_2...F1_N$ (i.e. at least two fuzzy sets), each of which identifies a respective degree of belonging of a value of internal temperature $T_{INi}$, a second group of fuzzy sets F2 comprising a plurality of fuzzy sets $F2_1, F2_2...F2_N$ (i.e. at least two fuzzy sets), each of which identifies a respective degree of belonging of a value of temperature variation $\delta T_{Dj}$, a third group of fuzzy sets F3 comprising a plurality of fuzzy sets $F3_1, F3_2...F3_N$ (i.e. at least two fuzzy sets), each of which identifies a respective degree of belonging of an opening state of the control valve V,

a fourth group of fuzzy sets F4 comprising a plurality of fuzzy sets $F4_1, F4_2...F4_N$ (i.e. at least two fuzzy sets) each of which identifies a respective degree of belonging of a value of the speed of the fan F,

a plurality of predetermined inferential rules that establish on the basis of the degree of belonging of each value of internal temperature $T_{INi}$ and the degree of belonging of each value of temperature variation $\delta T_{Dj}$, the degree of belonging of the opening state of the control valve V and the degree of belonging of the speed of the fan F.

Each group of fuzzy sets F1, F2, F3, F4 comprises a respective a plurality of fuzzy sets, particularly at least two fuzzy sets.

Each fuzzy set identifies a degree of belonging (in other words each fuzzy set is associated with a degree of belonging).

Consequently more fuzzy sets (and then more degrees of belonging) can be associated with a same value of an input variable which can be a value of internal temperature $T_{INi}$, a value of temperature variation $\delta T_{Dj}$, a value associated with to an open state of the control valve V and a value associated with the speed of the fan F.

This is due to the fact that, when a fuzzy domain is used, a value of an input variable can belong with a degree of belonging to one or more predetermined classes which are established based on type of the application.

For example, a temperature value equal to 25°C can belong to a class "warm" which has a degree of belonging equal to 0,8 and to a class "cold" which has a degree of belonging equal to 0,4.

In this example, two fuzzy data (0,8 and 0,4) are associated with to the same temperature value (25°C) which is a precise data.

The inferential rules are established a priori, i.e. before the use of the control system.

Said inferential rules allow to establish the degree of belonging of the opening state of the control valve V to each fuzzy set $F3_1, F3_2 ... F3_N$ of the third group of fuzzy sets F3, and the degree of the belonging of the speed of fan F to each fuzzy set $F4_1, F4_2 ... F4_N$ of the fourth group of fuzzy sets F4, on the basis of the degree of belonging to each value of internal temperature $T_{INi}$ and of the degree of belonging to each value of variation temperature $\delta T_{Dj}$.

Furthermore, the logic control unit 4 is configured to:

∘ perform a respective fuzzification (or fuzzy transform) referred to:

each value of internal temperature $T_{INi}$ to obtain a respective first fuzzy data set $P1_i$ comprising a respective plurality of first fuzzy data $P1_{i1}, P1_{i2} ... P1_{iN}$, wherein each first fuzzy data identifies a respective degree of belonging of said value of internal temperature $T_{INi}$, and is obtained by means of a predetermined first equation defined by a plurality of parameters,

each value of temperature variation $\delta T_{Dj}$ to obtain a respective second fuzzy data set $P2_i$ comprising a respective plurality of second fuzzy data $P2_{i1}, P2_{i2} ... P2_{iN}$, wherein each second fuzzy data identifies a respective degree of belonging of said value of temperature variation $\delta T_{Dj}$, and is obtained by means of a predetermined second equation defined by a plurality of further parameters,

∘ apply said predetermined inferential rules to each pair of fuzzy data formed by a first fuzzy data $P2_{i1}, P1_{i2} ... P1_{iN}$ and a second fuzzy data $P2_{i1}, P2_{i2} ... P2_{iN}$ to obtain a respective third fuzzy data set $P3_i$ comprising a plurality of third fuzzy data $P3_{i1}, P3_{i2} ... P3_{iN}$, wherein each third fuzzy data identifies a respective degree of belonging of said opening state of the control valve V with a respective fuzzy data set associated with said third fuzzy data of said third fuzzy data set $P3_i$, and a respective fourth fuzzy data set $P4_i$ comprising a plurality of fourth fuzzy data $P4_{i1}, P4_{i2} ... P4_{iN}$, wherein each fourth fuzzy data identifies a respective degree of belonging of said value of the speed of the fan F with respect to a respective further fuzzy data set associated with said fourth fuzzy data of said fourth fuzzy data set $P4_i$,

∘ perform a respective defuzzification (or fuzzy inverse transform) referred to:

said fuzzy data set associated with to said third fuzzy data of said third fuzzy data set $P3_i$ to obtain a first real number $R1$ indicating if the control valve V is to be open and how much to open or if it is to be closed,

said further fuzzy data set associated with fourth fuzzy data of said fourth fuzzy data set $P4_i$ to obtain a second real number $R2$ indicating the speed of the fan F.

The fuzzification allows precise numeric data, i.e. the value of internal temperature $T_{INi}$ and the value of the temperature variation $\delta T_{Dj}$, to pass to the fuzzy domain and therefore said precise numeric data become fuzzy data.

For fuzzification it is possible to use any equation that represents any function adapted to identify a degree of belonging to a fuzzy set.

For the fuzzification of each value of internal temperature value $T_{INi}$ it is possible to use a predetermined first equation which represents any function identifying a degree of belonging to a fuzzy set of the first group of fuzzy sets.

For the fuzzification of each value of temperature variation value $\delta T_{Dj}$ it is possible to use a predetermined second equation which represents any function identifying a degree of belonging to a fuzzy set of the second group of fuzzy sets.

In particular, in the embodiment being described, with reference to the fuzzification referred to each value of internal temperature $T_{INi}$, said predetermined first equation is defined by a first triad of parameters $a_1$, $b_1$, $c_1$ and represents a Gaussian curve:

$$\mathrm{P1}_i = a_1 \cdot e^{-\frac{(x_i - b_1)^2}{c_1{}^2}}$$

wherein

the parameter $a_1$ is a predetermined number greater than 0 and less than or equal to 1 and represents the height of the Gaussian curve;

the parameter $b_1$ is a predetermined value of temperature in which the Gaussian curve is centred;
the parameter $c_1$ is a predetermined value indicating the distance between a symmetry axis of the Gaussian curve and an inflection point of the Gaussian curve; and
$x_i$ is a respective value of internal temperature $T_{INi}$.

Furthermore, with reference to the fuzzification referred to each value of the temperature variation $\delta T_{Dj}$, said predetermined second equation is defined by a second triad of parameters $a_2$, $b_2$, $c_2$ and represents a Gaussian curve:

$$P2_i = a_2 \cdot e^{-\frac{(x_j - b_2)^2}{c_2{}^2}}$$

wherein

the parameter $a_2$ is a predetermined number greater than 0 and less than or equal to 1 and represents the height of the Gaussian curve;
the parameter $b_2$ is a predetermined value of temperature in which the Gaussian curve is centred;
the parameter $c_2$ is a predetermined value indicating the distance between a symmetry axis of the Gaussian curve and an inflection point of the Gaussian curve; and
$x_j$ is a respective value of temperature variation $\delta T_{Dj}$.

The defuzzification allows the transition from the fuzzy domain to the domain of real numbers.
The defuzzification is applied on each fuzzy data set of a third fuzzy data of a third fuzzy data set $P3_i$ and on each further fuzzy data set of a third fuzzy data of a fourth fuzzy data set $P4_i$.
Said third fuzzy data set $P3_i$ and said fourth fuzzy data set $P4_i$ are obtained through the application of the predetermined inferential rules (stored in said storage means 3) to each possible pair of fuzzy data formed by a first fuzzy data $P1_{i1}, P1_{i2}...P1_{iN}$ and by a second fuzzy data $P2_{i1}, P2_{i2}...P2_{iN}$.
Said first fuzzy data $P1i_1, P1_{i2}...P1_{iN}$ and said second fuzzy data $P2_{i1}, P2_{i2}...P2_{iN}$ belong respectively to a first fuzzy data set $P1_i$ and to a second fuzzy data set $P2_i$, wherein said first fuzzy data set $P1_i$ and said second fuzzy data set $P2_i$ can comprise a respective plurality of fuzzy data.
The defuzzification can be performed by means of one of the following methods of known type: mean of maxima, last of maxima, center of sums, center of area, center of inertia, center of gravity.
In the embodiment being disclosed, the defuzzication referred to said fuzzy data set associated with to a third fuzzy data of a third fuzzy data set $P3_i$ is performed through a method called mean of maxima.
The logic control unit 4 is configured to:

◦ select a maximum value $P3_{iMAX}$ with respect to each third fuzzy data $P3_{i1}, P3_{i2}...P3_{iN}$, wherein said maximum value is associated with at least one fuzzy set $F3_1, F3_2...F3_N$ of the third group of fuzzy sets F3,
◦ calculate at least two real numbers $P3_1$, $P3_2$ applying a predetermined third equation defined by a third triad of parameters $a_3$, $b_3$, $c_3$:

$$x^2 - 2\,b_3\,x + b_3{}^2 + c_3{}^2 \ln \frac{P3_{iMAX}}{a_3} = 0$$

wherein

the parameter $a_3$ is a number greater than 0 and less than or equal to 1 and represents the height of a Gaussian curve;
the parameter $b_3$ is a value of temperature in which a Gaussian curve is centred;
the parameter $c_3$ is the value of the distance between a symmetry axis of a Gaussian curve and an inflection point of said Gaussian curve; and
$x$ is the value that P3 can assume;

◦ calculate said first real number $R1$ equal to the mean value of said at least two real numbers $P3_1$, $P3_2$.

Also the defuzzification referred to said further set associated with a fourth fuzzy data of a fourth fuzzy data set $P4_i$ is performed through the method called mean of maxima.

The logic control unit 4 is configured to:

  ◦ select a maximum value $P4_{iMAX}$ with respect to each fourth fuzzy data $P4_{i1}, P4_{i2}...P4_{iN}$, wherein said maximum value is associated with at least one fuzzy set $F4_1, F4_2...F4_N$ of the fourth group of fuzzy sets F4,
  ◦ calculate at least two reals number $P4_1$, $P4_2$ applying the following predetermined fourth equation defined by a forth triad of parameters $a_4$, $b_4$, $c_4$:

$$x^2 - 2\,b_4\,x + b_4{}^2 + c_4{}^2\,\ln\frac{P4_{iMAX}}{a_4} = 0$$

wherein

  the parameter $a_4$ is a number greater than 0 and less than or equal to 1 and represents the height of a Gaussian curve;
  the parameter $b_4$ is a value of temperature in which a Gaussian curve is centred;
  the parameter $c_4$ is the value of the distance between a symmetry axis of a Gaussian curve and an inflection point of said Gaussian curve; and
  $x$ is the value that P4 can assume;

  ◦ calculate said second real number $R2$ equal to the mean value of said at least two real numbers $P4_1$, $P4_2$.

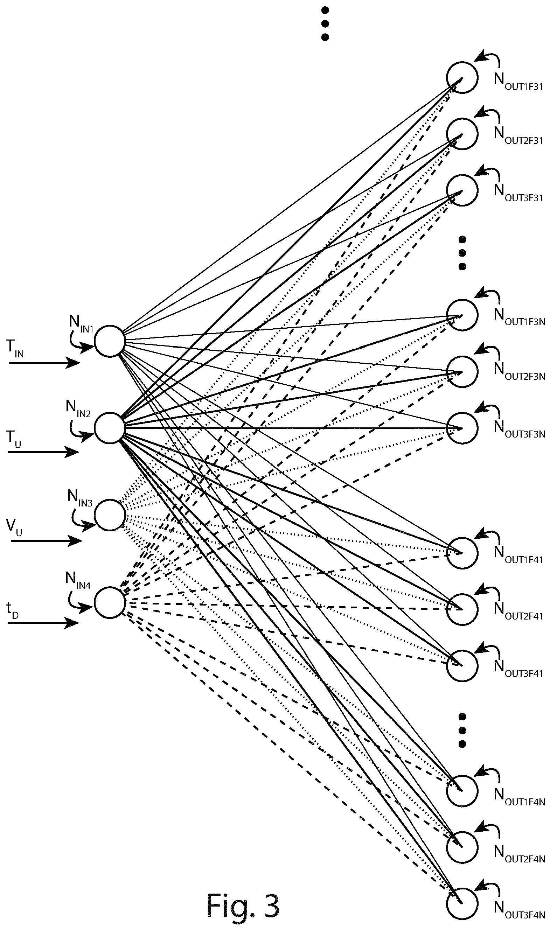

Furthermore, the logic control unit 4 is configured to perform a neural network (shown in Figures 3 and 4).

Said neural network comprises an input layer and an output layer.

In the embodiment being disclosed, the neural network does not have any intermediate layer between the input layer and the output layer.

The input layer comprises a plurality of input nodes for receiving a respective value.

In the embodiment being disclosed, the input layer comprises four input nodes: a first input node $N_{IN1}$, a second input node $N_{IN2}$, a third input node $N_{IN3}$ and a fourth input node $N_{IN4}$.

In particular, said neural network is a Kohonen network and said first input node $N_{IN1}$ receives a value of internal temperature $T_{INi}$, said second input node $N_{IN2}$ receives a value of temperature $T_U$ selected by the user, said third input node $N_{IN3}$ receives a value of speed $V_U$ of the fan F selected by the user and said fourth input node $N_{IN4}$ receives a value of temperature variation $\delta T_{Dj}$.

The output layer comprises:

  ▪ a respective first group of output nodes $N_{OUT1F11}$, $N_{OUT2F11}...N_{OUTNF11}$; $N_{OUT1F12}, N_{OUT2F12}...N_{OUTNF12}$;... $N_{OUT1F1N}, N_{OUT2F1N}...N_{OUTNF1N}$ for each fuzzy set $F1_1, F1_2...F1_N$ of the first group of fuzzy sets F1,
  ▪ a respective second group of output nodes $N_{OUT1F21}, N_{OUT2F21}...N_{OUTNF21}$; $N_{OUT1F22}$, $N_{OUT2F22}...N_{OUTNF22}$;... $N_{OUT1F2N}$, $N_{OUT2F2N}...N_{OUTNF2N}$ for each fuzzy set $F2_1, F2_2...F2_N$ of the second group of fuzzy sets F2.

In other words, for each fuzzy set of the first group of fuzzy sets F1 there is a respective first group of output nodes and for each fuzzy set of the second group of fuzzy sets F2 there is a respective second group of output nodes.

Each first group of output nodes comprises one or more output nodes and each second group of output nodes comprises one or more output nodes.

In particular, said neural network is configured to:

  • receive over time said value of internal temperature $T_{INi}$, said value of temperature variation $\delta T_{Dj}$, said temperature value $T_U$ and said speed value Vu at a respective input layer $N_{IN1}, N_{IN2}, N_{IN3}, N_{IN4}$, and
  • provide as output the updated parameters for said predetermined first equation at a respective output node of each first group of output nodes, and the further updated parameters for said predetermined second equation at a respective output node of each second group of output nodes.

The logic control unit 4 is configured to:

  ◦ insert said updated parameters in said predetermined first equation to obtain a first updated fuzzy data $P1_i$ and said further updated parameters in said predetermined second equation to obtain a second updated fuzzy data $P2_i$,
  ◦ apply said predetermined inferential rules to each pair of fuzzy data formed by a first updated fuzzy data $P1_i$ and a second updated fuzzy data $P2_i$, so as to obtain a third updated fuzzy data $P3_i$ associated with the control valve V and a fourth updated fuzzy data $P4_i$ associated with the speed of the fan F, as well as to obtain an updated first real number $R1$ and an updated second real number R2, through defuzzification;

∘ generate a signal to control said control valve V containing an information concerning said first real number $R1$ or said updated first real number $R1$ for opening/closing the control valve V and a further signal to control said adjusting means A containing an information concerning said second real number R2 or said updated second real number R2 for the speed of the fan F.

In the embodiment being disclosed, each first group of output nodes comprises three respective output nodes $N_{OUT1F11}, N_{OUT2F11}, N_{OUT3F11}$, $N_{OUT1F12}, N_{OUT2F12}, N_{OUT3F12}, ... N_{OUT1F1N}, N_{OUT2F1N}, N_{OUT3F1N}$ and said neural network is configured to provide at each output node of said first group of output nodes a respective updated parameter $a_1, b_1, c_1$.

In this way, it is possible to obtain a respective first triad of updated parameters $a_1, b_1, c_1$.

Each second group of output nodes comprises three respective output nodes $N_{OUT1F21}, N_{OUT2F21}, N_{OUT3F21}$, $N_{OUT1F21}, N_{OUT2F21}, N_{OUT3F21}, ... N_{OUT1F2N}, N_{OUT2F2N}, N_{OUT3F2N}$ and said neural network is configured to provide at each output node of said second group of output nodes a respective updated parameter $a_2, b_2, c_2$. In this way it is possible to obtain a second triad of updated parameters $a_2, b_2, c_2$.

In particular, said neural network is a Kohonen network and said input node $N_{IN4}$ for receiving a value of temperature $T_U$ selected by the user and said input node $N_{IN4}$ for receiving a value of speed $V_U$ of the fan F selected by the user are arranged between said input node $N_{IN1}$ for receiving a value of internal temperature $T_{INi}$ and said input node $N_{IN4}$ for receiving a value of temperature variation $\delta T_{Dj}$.

Consequently, said logic control unit 4 is configured to insert the first triad of updated parameters $a_1, b_1, c_1$ in the predetermined first equation to obtain a first updated fuzzy data $P1_i$ and to insert the second triad of updated parameters $a_2, b_2, c_2$ in the predetermined second equation to obtain a second updated fuzzy data $P2_i$.

In other words, through the neural network it is possible to take into account to control the thermal comfort the temperature $T_U$ desired by the user and the speed $V_U$ of the fan desired by the user and update both the parameters which are used in the first equation for the fuzzification of the values of internal temperature $T_{INi}$ and the parameters which are used in the second equation for the fuzzification of the values of temperature variation $\delta T_{Dj}$.

Consequently, if at the beginning the fuzzification of the values of internal temperature $T_{INi}$ and the fuzzification of the values of temperature variation $\delta T_{Dj}$ are respectively obtained through equations which are predetermined (i.e. the predetermined first equation and the predetermined second equation) since the parameters used in the respective equations are decided a priori, through the neural network it is possible to update the parameters present in said equations to adapt the thermal comfort to the needs of the user.

The output layer of the neural network can comprise:

- a respective third group of output nodes $N_{OUT1F31}, N_{OUT2F31}...N_{OUTNF31}$, $N_{OUT1F32}, N_{OUT2F32}...N_{OUTNF32}, ... N_{OUT1F3N}, N_{OUT2F3N}...N_{OUTNF3N}$ for each fuzzy set F31, F32...F3N of the third group of fuzzy set F3,
- a respective fourth group of output nodes $N_{OUT1F41}, N_{OUT2F41}...N_{OUTNF41}$, $N_{OUT1F42}, N_{OUT2F42}...N_{OUTNF42}, ...N_{OUT1F4N}, N_{OUT2F4N}...N_{OUTNF4N}$ for each fuzzy set $F4_1, F4_2...F4_N$ of the fourth group of fuzzy set F4.

The neural network is configured to provide as output:

the updated parameters $a_3, b_3, c_3$ of said third triad of parameters for said predetermined third equation, each of which is at a respective output node of each third group of output nodes,

the updated parameters $a_4, b_4, c_4$ of said fourth triad of parameters for said predetermined fourth equation, each of which is at an output node of each fourth group of output nodes.

The logic control unit 4 can be configured to:

∘ insert said third triad of updated parameters $a_3, b_3, c_3$ in said predetermined third equation to obtain an updated fuzzy data set, due to the change of the shape of the function represented by said predetermined third equation, wherein said updated fuzzy data set is associated with said third fuzzy data of said third fuzzy data set $P3_i$,

∘ insert said fourth triad of updated parameters $a_4, b_4, c_4$ in said predetermined fourth equation to obtain a further updated fuzzy data set, due to the shape of the function represented by said predetermined fourth equation, wherein said further fuzzy data set is associated with said fourth fuzzy data of said fourth fuzzy data set $P3_i$,

∘ defuzzify said updated fuzzy data (to obtain a first updated real number $R1$) and said further updated fuzzy data set (to obtain a second updated real number $R2$).

Each third group of output nodes $N_{OUT1F31}, N_{OUT2F31}...N_{OUTNF31}$, $N_{OUT1F32}, N_{OUT2F32}...N_{OUTNF32},...$

$N_{OUT1F3N}, N_{OUT2F3N}...N_{OUTNF3N}$ comprises three output nodes $N_{OUT1F31}$, $N_{OUT2F31}, N_{OUT3F31}$, $N_{OUT1F32}, N_{OUT2F32}, N_{OUT3F32}....N_{OUT1F3N}, N_{OUT2F3N}, N_{OUT3F3N}$ and said neural network can be configured to provide at each output node of said third group of output nodes a respective updated parameter $a_3$, $b_3$, $c_3$ for said predetermined third equation.

In this way it is possible to obtain a respective third triad of updated parameters $a_3$, $b_3$, $c_3$ for each third group of output nodes.

Said logic control unit 4 can be configured to insert said updated parameters $a_3$, $b_3$, $c_3$ in said predetermined third equation to obtain an updated fuzzy data set, due to the change of the shape of the function represented by said predetermined third equation, wherein said updated fuzzy data set is associated with said third fuzzy data of said third fuzzy data set $P3_i$.

Each fourth group of output nodes $N_{OUT1F41}$, $N_{OUT2F41}...N_{OUTNF41}; N_{OUT1F42}, N_{OUT2F42}...N_{OUTNF42},...$ $N_{OUT1F4N}, N_{OUT2F4N}...N_{OUTNF4N}$ comprises three respective output nodes $N_{OUT1F41}$, $N_{OUT2F41}, N_{OUT3F41}$, $N_{OUT1F42}, N_{OUT2F42}..N_{OUTNF42}$, ... $N_{OUT1F4N}, N_{OUT2F4N}...$ $N_{OUTNF4N}$, at **which** a respective updated parameter $a_4$, $b_4$, $c_4$ is present.

In this way it is possible to obtain a respective fourth triad of updated parameters $a_4$, $b_4$, $c_4$ for each fourth group of output nodes.

Said logic control unit 4 can be configured to insert said updated parameters $a_4$, $b_4$, $c_4$ in said predetermined fourth equation to obtain a further updated fuzzy data set, due to the change of the shape of the function represented by said predetermined fourth equation, wherein said further updated fuzzy data set is associated with said fourth fuzzy data of said fourth fuzzy data set $P4_i$.

In other words, at the beginning, the control logic unit 4 performs the defuzzification of said fuzzy data set associated with said third fuzzy data of said third fuzzy data set $P3_i$ to obtain a first updated real number $R1$ indicating if the control valve V is to be open and how or if is to be closed, as well as the defuzzification of said further fuzzy data set associated with said fourth fuzzy data of said fourth fuzzy data set $P4_i$ to obtain a second updated real number $R2$ indicating the speed of the fan F.

Subsequently, every time that the parameters of the predetermined third equation are updated, the form of the function represented by said predetermined third equation changes according to said parameters and therefore the fuzzy data set associated with said third fuzzy data of said third data set fuzzy $P3_i$ changes.

Similarly, every time that the parameters of the predetermined fourth equation are updated, the form of the function represented by said predetermined fourth equation changes according to said parameters and therefore the further set of fuzzy data associated with said fourth fuzzy data of said fourth set of fuzzy data $P4_i$ changes.

Consequently, every time that the parameters of the predetermined third equation are updated a first updated real number is obtained through the fuzzification of the respective fuzzy data set and every time that the parameters of the predetermined fourth equation are updated a second updated real number is obtained through the defuzzification of the respective further fuzzy data set.

Finally, the logic control unit 4 generates a signal adapted to control the control valve V containing an information (i.e. said first real number $R1$) concerning the opening/closing of said control valve V and a further signal adapted to control said adjusting means A containing an information (i.e. said second real number $R2$) concerning the speed of the fan.

In other words, at the beginning the logic control unit 4 generates a signal containing a first real number $R1$ for controlling the opening/closing of the control valve V and subsequently generates a signal containing a first updated real number $R1$ every time that a value of temperature $T_U$ or a value of speed $V_U$ of the fan F is selected by an user.

Therefore, the information contained in the signal generated by the logic control unit 4 is at the beginning a first real number $R1$ and subsequently a first updated real number $R1$.

Similarly to what has been said for the signal, at the beginning the logic control unit 4 generates a further signal containing a second real number $R2$ for controlling the speed of the fan F through said adjusting means A and subsequently generates a further signal containing a second updated real number $R2$ every time that a value of temperature $T_U$ or a value of speed $V_U$ of the fan F is selected by an user.

Therefore, the information contained in the further signal generated by the logic control unit 4 is at the beginning the second real number $R2$ and subsequently the second updated real number $R2$.

In fact, the update of the first real number $R1$ and the second real number $R2$ (and then of the respective fuzzy data sets from which the real numbers mentioned above are obtained) is due to the fact that the logic control unit 4 takes into account of the changes of said value of temperature $T_U$ or said value of speed $V_U$.

After generating the signal and the further signal, the logic control unit 4 will send said signal and said further signal to the air conditioning unit U.

With reference to the logic control unit 4 disclosed above adapted to perform a fuzzification and a defuzzification as well as a neural network, said logic control unit 4 is a neuro-fuzzy controller.

As already said, the air conditioning unit U is provided with adjusting means A for adjusting the speed of the fan F.

In a first alternative, said adjusting means can comprise an inverter.

In a second alternative, said adjusting means can comprise one or more relay.

When said adjusting means A for adjusting the speed of the fan F comprise an inverter, the fourth group of fuzzy sets F4 comprise at least fourth fuzzy sets $F4_1, F4_2, F4_3, F4_4$:

- a first fuzzy set $F4_1$ for identifying a first speed of the fan F,
- a second fuzzy set $F4_2$ for identifying a second speed of the fan F, different from said first speed,
- a third fuzzy set $F4_3$ for identifying a third speed of the fan F, different from said first speed and said second speed, and

a fourth fuzzy set $F4_4$ for identifying a fourth speed of the fan F equal to zero.

When said adjusting means A for adjusting the speed of the fan F comprise one or more relays, said fourth group of fuzzy sets F4 comprises two respective fuzzy sets $F4_1, F4_2$ for each relay:

- a first fuzzy set $F4_1$ for identifying a first speed of the fan F equal to zero, and
- a secondo fuzzy set $F4_2$ for identifying a second speed, different from said first speed.

Regardless of whether said adjusting means comprise an inverter or one or more relays, the first real number $R1$ and the second real number $R2$ obtained through the defuzzification are both numbers greater than 0 and less than or equal to 10.

The present invention relates also to a method for controlling the thermal comfort inside an environment, through the control system above mentioned.

Said method comprises the following steps:

∘ acquiring a value of internal temperature $T_{INi}$ by said temperature detecting means 1 for a respective predetermined time period $\Delta t_{REFi}$, as well as said value of temperature $T_U$ and said value of speed $V_U$ from said user interface module 2;

∘ calculating one or more values of temperature variation $\delta T_{Dj}$, with j=1,...,M, where M is a positive integer and j is the number of predetermined time periods, and wherein each value of temperature variation $\delta T_{Dj}$ is obtained by the subtraction between the value of internal temperature $T_{INi}$ in a predetermined time period and the value of internal temperature $T_{INi-1}$ in the previous predetermined time period;

∘ storing:

the values of internal temperature $T_{INi}$ referred to at least two predetermined time periods $\Delta t_{REFi}$ and said one or more values of temperature variation $\delta T_{Dj}$, as well as said temperature value $T_U$ and said value of speed $V_U$;

a first group of fuzzy sets F1 comprising a plurality of fuzzy sets $F1_1, F1_2...F1_N$, each of which identifies a respective degree of belonging of a value of internal temperature $T_{INi}$;

a second group of fuzzy sets F2 comprising a plurality of fuzzy sets $F2_1, F2_2...F2_N$, each of which identifies a respective degree of belonging of a value of temperature variation $\delta T_{Dj}$;

a third group of fuzzy sets F3 comprising a plurality of fuzzy sets $F3_1, F3_2...F3_N$, each of which identifies a respective degree of belonging of an opening state of the control valve V;

a fourth group of fuzzy sets F4 comprising a plurality of fuzzy sets $F4_1, F4_2...F4_N$, each of which identifies a respective degree of belonging of a value of the speed of the fan F;

a plurality of predetermined inferential rules that establish on the basis of the degree of belonging of each value of internal temperature $T_{INi}$ and the degree of belonging of each value of temperature variation $\delta T_{Dj}$, the degree of belonging of the opening state of the control valve V and the degree of belonging of the speed of the fan F,

o performing a respective fuzzification referred to:

each value of internal temperature $T_{INi}$ to obtain a respective first fuzzy data set $P1_i$ comprising a respective plurality of first fuzzy data $P1_{i1}, P1_{i2}... P1_{iN}$, wherein each first fuzzy data identifies a respective degree of belonging of said value of internal temperature $T_{INi}$, and is obtained by means of a predetermined first equation defined by a plurality of parameters;

each value of temperature variation $\delta T_{Dj}$ to obtain a respective second fuzzy data set $P2_i$ comprising a respective plurality of second fuzzy data $P2_{i1}, P2_{i2}...P2_{iN}$, wherein each second fuzzy data identifies a respective degree of belonging of said value of temperature variation $\delta T_{Dj}$, and is obtained by means of a predetermined second equation defined by a plurality of further parameters,

o applying said predetermined inferential rules to each pair of fuzzy data formed by a first fuzzy data $P1_{i1}, P1_{i2}...P1_{iN}$ and a second fuzzy data $P2_{i1}, P2_{i2}...P2_{iN}$ to obtain a respective third fuzzy data set $P3_i$ comprising a plurality of third

fuzzy data $P3_{i1}, P3_{i2}...P3_{iN}$, wherein each third fuzzy data identifies a respective degree of belonging of said opening state of the control valve V with respect to a respective fuzzy data set associated with said third fuzzy data of said third fuzzy data set $P3_i$, and a respective fourth fuzzy data set $P4_i$ comprising a plurality of fourth fuzzy data $P4_{i1}, P4_{i2}...P4_{iN}$, wherein each fourth fuzzy data identifies a respective degree of belonging of said value of said speed of the fan F with respect to a respective further fuzzy data set associated with said fourth fuzzy data of said fourth fuzzy data set $P4_i$,
o performing a respective defuzzification referred to:

> said fuzzy data set associated with said third fuzzy data of said third fuzzy data set $P3_i$ to obtain a first real number $R1$ indicating if the control valve V is to be open and how much to open or if it is to be closed,
> said further fuzzy data set associated with said fourth fuzzy data of said fourth fuzzy data set $P4_i$ to obtain a second real number $R2$ indicating the speed of the fan F,

∘ receiving over time a value of internal temperature $T_{INi}$, a value of temperature variation $\delta T_{Dj}$, a temperature value $T_U$ and a speed value Vu at a respective input node $N_{IN1}, N_{IN2}, N_{IN3}, N_{IN4}$ of said neural network;
∘ providing as output the updated parameters for said predetermined first equation at a respective output node of each first group of output nodes of said neural network, and the further updated parameters for said predetermined second equation at a respective output node of each second group of output nodes of said neural network;
∘ inserting said updated parameters in said predetermined first equation to obtain a first updated fuzzy data $P1_i$ and said further updated parameters in said predetermined second equation to obtain a second updated fuzzy data $P2_i$,
∘ applying said predetermined inferential rules to each pair of fuzzy data formed by a first updated fuzzy data $P1_i$ and a second updated fuzzy data $P2_i$, so as to obtain a third updated fuzzy data $P3_i$ associated with the control valve V and a fourth updated fuzzy data $P4_i$ associated with the speed of the fan F, as well as to obtain an updated first real number $R1$ or a second real number $R2$, through defuzzification;
∘ generating a signal to control said control valve V containing an information concerning said first real number $R1$ or said updated first real number $R1$ for opening/closing the control valve V and a further signal to control said adjusting means A containing an information concerning said second real number $R2$ or said updated second real number $R2$ for the speed of the fan F.

## Example

An example is described below in which two internal temperature values $T_{INi}$ are taken into consideration:

- a first internal temperature value $T_{INi}$ = 20 ° C in a predetermined first time period,
- a second internal temperature value $T_{IN2}$ = 21,5 °C in a second predetermined period of time, subsequent to said predetermined first time period.

Each temperature value is obtained at the end of a respective predetermined time period.
Consequently, the value of temperature variation is the following: $\delta T_{D1} = T_{IN2} - T_{IN1}$ = 1,5°C.
Furthermore, the first group of fuzzy sets F1 comprises three fuzzy sets $F1_1, F1_2, F1_3$, so that three number identifying a respective degree of belonging to a fuzzy set of said first group of fuzzy sets F1 are associated with the value of internal temperature $T_{IN1}$.
In particular, the first group of fuzzy sets F1 comprises:

- a first fuzzy set $F1_1$ for identifying a first thermal condition called 'COLD',
- a second fuzzy set $F1_2$ for identifying a second thermal condition called 'GOOD', different from the first thermal condition,
- a third fuzzy set $F1_3$ for identifying a third thermal condition 'HOT', different from the first thermal condition and from the second thermal condition.

Each fuzzy set $F1_1, F1_2, F1_3$ is identified a respective first equation representing a Gaussian curve defined by a first triad of parameters $a_1$ , $b_1$, $c_1$ which is predefined.
Below a first table which shows for each fuzzy set of the first group of fuzzy sets F1 a respective thermal condition and a respective first triad of parameters.

Table 1

| Fuzzy set | Thermal Condition | Parameters (first triad) |
|---|---|---|
| $F1_1$ | COLD | $a_1$ = 0,3989 $b_1$ = 20 $c_1$ = 1,414 |

(continued)

| Fuzzy set | Thermal Condition | Parameters (first triad) |
|---|---|---|
| $F1_2$ | GOOD | $a_1 = 0,3989\ b_1 = 22\ c_1 = 1,414$ |
| $F1_3$ | HOT | $a_1 = 0,3989\ b_1 = 24\ c_1 = 1,414$ |

The second group of fuzzy sets F2 comprises three fuzzy sets $F2_1$, $F2_2$, $F2_3$, so that three numbers identifying a respective degree of belonging to a fuzzy set of said second group of fuzzy sets F2 are associated with the value of temperature variation $\delta T_{D1}$.

In particular, the second group of fuzzy sets F2 comprises:

- a first fuzzy set $F2_1$ for identifying a first temperature variation called 'SLOW',
- a second fuzzy set $F2_2$ for identifying a second temperature variation called 'MEDIUM', different from the first temperature variation,
- a third fuzzy set $F2_3$ for identifying a third temperature variation call 'FAST', different from the first temperature variation and from the second temperature variation.

Each fuzzy set $F2_1$, $F23_2$, $F2_3$ is identified by a respective second equation representing a Gaussian curve defined by a second triad of parameters $a_2$, $b_2$, $c_2$ which is predefined.

Below a second table which shows for each fuzzy set of the second group of fuzzy sets F2 a respective temperature variation and a respective second triad of parameters.

Table 2

| Fuzzy set | Temperature variation temperatura | Parameters (second triad) |
|---|---|---|
| $F2_1$ | SLOW | $a_2 = 0,3989\ b_2 = 1\ c_2 = 1,414$ |
| $F2_2$ | MEDIUM | $a_2 = 0,3989\ b_2 = 2\ c_2 = 1,414$ |
| $F2_3$ | FAST | $a_2 = 0,3989\ b_2 = 3\ c_2 = 1,414$ |

The third group of fuzzy sets F3 comprises fourth fuzzy sets $F3_1$, $F3_2$, $F3_3$, $F3_4$:

- a first fuzzy set $F3_1$ for identifying a first open state of the control valve V: '*state* 1 = OPEN1',
- a second fuzzy set $F3_2$ for identifying a second open state of the control valve V, different from the first open state: '*state* 2 = OPEN2',
- a third fuzzy set $F3_3$ for identifying a third open state of the control valve V, different from the first open state and the second open state: '*state* 3 = OPEN3', and
- a fourth fuzzy set $F3_4$ for identifying a closed state of the control valve V: '*state* 4 = CLOSED'.

Each fuzzy set $F3_1$, $F3_2$, $F3_3$, $F3_4$ is identified by a respective third equation representing a Gaussian curve defined by a third triad of parameters $a_3$, $b_3$, $c_3$ which is predefined.

Below a third table which shows for each fuzzy set of the third group of fuzzy sets F3 a respective state of the control valve and a respective third triad of parameters.

Table 3

| Fuzzy sets | State of the control valve | Parameters (third triad) |
|---|---|---|
| $F3_1$ | OPEN1 | $a_3 = 0,3989\ b_3 = 3\ c_3 = 1,414$ |
| $F3_2$ | OPEN2 | $a_3 = 0,3989\ b_3 = 6\ c_3 = 1,414$ |
| $F3_3$ | OPEN3 | $a_3 = 0,3989\ b_3 = 10\ c_3 = 1,414$ |
| $F3_4$ | CLOSED | $a_3 = 0,3989\ b_3 = 0\ c_3 = 1,414$ |

In the example being disclosed, said adjusting means A for adjusting the speed of the fan F comprise an inverter.

Said fourth group of fuzzy sets F4 comprises two respective fuzzy sets $F4_1$, $F4_2$ for the inverter:

- a first fuzzy set $F4_1$ for identifying a first speed condition for the fan F equal to zero called 'SPEED0', and
- a second fuzzy set $F4_2$ for identifying a second speed condition for the fan F called 'SPEED1', different from the first speed condition.

Below a fourth table which shows for each fuzzy set of the fourth group of fuzzy sets F4 a respective speed condition for the fan F and a respective fourth triad of parameters.

Table 4

| Fuzzy sets | Speed condition of the fan | Parameters (fourth triad) |
|---|---|---|
| $F4_1$ | SPEED0 | $a_4 = 0{,}3989$ $b_4 = 2$ $c_4 = 1{,}414$ |
| $F4_2$ | SPEED1 | $a_4 = 0{,}3989$ $b_4 = 8$ $c_4 = 1{,}414$ |

Below a fifth table which shows the inferential rules stored in the storage means 3.

Table 5

| Inferential rules | |
|---|---|
| If $T_{IN1}$ = COLD and $t_{D1}$ = SLOW | V = OPEN1 and F = SPEED1 |
| If $T_{IN1}$ = COLD and $t_{D1}$ = MEDIUM | V = OPEN2 and F = SPEED1 |
| If $T_{IN1}$ = COLD and $t_{D1}$ = FAST | V = OPEN3 and F = SPEED1 |
| If $T_{IN1}$ = GOOD and $t_{D1}$ = SLOW | V = CLOSED and F = SPEED0 |
| If $T_{IN1}$ = GOOD and $t_{D1}$ = MEDIUM | V = OPEN1 and F = SPEED1 |
| If $T_{IN1}$ = GOOD and $t_{D1}$ = FAST | V = OPEN2 and F = SPEED1 |
| If $T_{IN1}$ = HOT and $t_{D1}$ = SLOW | V = OPEN1 and F = SPEED1 |
| If $T_{IN1}$ = HOT and $t_{D1}$ = MEDIUM | V = OPEN2 and F = SPEED1 |
| If $T_{IN1}$ = HOT and $t_{D1}$ = FAST | V = OPEN3 and F = SPEED1 |

The fuzzication referred to the value of internal temperature $T_{IN1}$ = 21,5°C allows to obtain a first set of fuzzy data $P1_i$:

$P1_{i1}$=0,1295,
$P1_{i2}$=0,3520,
$P1_{i3}$=0,0175.

The fuzzification referred to the value of temperature variation $\delta T_{D1}$ = 1,5°C allows to obtain a second set of fuzzy data $P2_i$:

$P2_{i1}$=0,3520,
$P2_{i2}$=0,3520,
$P2_{i3}$=0,1295.

The possible pairs of fuzzy data are formed by a first fuzzy data of the first fuzzy data set and by a second fuzzy data of the second fuzzy data set, wherein a thermal condition is associates with the first fuzzy data and a temperature variation is associated with the second fuzzy data.
The sixth table below shows the possible combinations of thermal condition and temperature variation.

Table 6

| Thermal condition | Temperature variation |
|---|---|
| COLD | SLOW |
| COLD | MEDIUM |
| COLD | FAST |

(continued)

| Thermal condition | Temperature variation |
|---|---|
| GOOD | SLOW |
| GOOD | MEDIUM |
| GOOD | FAST |
| HOT | SLOW |
| HOT | MEDIUM |
| HOT | FAST |

The application of the inferential rules to each pair of fuzzy data formed by a thermal condition and a temperature variation (to which respective fuzzy data are associated) allows to obtain the results shown in the seventh table below (i.e. the numerical values associated with the fuzzy sets relating to the state of the control valve and the numerical values associated to the fuzzy sets relating to the fan speed).

Table 7

| Inferential rules | | | |
|---|---|---|---|
| Thermal condition | Temperature variation | State of the control valve | Speed of the fan |
| COLD | SLOW | OPEN1=0,1295 | SPEED1=0,1295 |
| COLD | MEDIUM | OPEN2=0,1295 | SPEED1=0,1295 |
| COLD | FAST | OPEN3=0,1295 | SPEED1=0,1295 |
| GOOD | SLOW | CLOSED=0,3520 | SPEED0=0,3520 |
| GOOD | MEDIUM | OPEN1=0,3520 | SPEED1 =0,3520 |
| GOOD | FAST | OPEN2=0,1295 | SPEED1=0,1295 |
| HOT | SLOW | OPEN1=0,0175 | SPEED1=0,0175 |
| HOT | MEDIUM | OPEN2=0,0175 | SPEED1=0,0175 |
| HOT | FAST | OPEN3=0,0175 | SPEED1=0,0175 |

One or more numerical values can correspond to each fuzzy set that identifies a degree of belonging of the control valve and to each fuzzy set that identifies the fan speed.
The numerical values associated with each degree of belonging to both the control valve and the fan speed are indicated below:

OPEN1 = 0,1295; 0,3520; 0,0175,
OPEN2 = 0,1295; 0,1295; 0,0175,
OPEN3 = 0,1295; 0; 0,0175
CLOSED = 0; 0,3520; 0,
SPEEDO = 0,3520,
SPEED1= 0,1295; 0,1295; 0,1295; 0,3520; 0,1295; 0,0175; 0,0175; 0,0175.

Below is the maximum value for each degree of belonging mentioned above:

OPEN1 = OR(0,1295; 0,3520; 0,0175) = 0,3520,
OPEN2 = OR(0,1295; 0,1295; 0,0175) = 0,1295,
OPEN3 = OR(0,1295; 0; 0,0175) = 0,1295,
CLOSED = OR(0; 0,3520; 0) = 0,3520,
SPEED0 = 0,3520.
SPEED1=OR (0,1295; 0,1295; 0,1295; 0,3520; 0,1295; 0,0175; 0,0175; 0,0175) = 0,3520.

By applying the defuzzification equations according to the method called "mean of the maxima" it is possible to obtain the following numerical values in the real domain:
VALVE = 1,5V,
FAN = 5V.

The temperature value $T_U$ selected by the user through the user interface module is 24°C and the speed value Vu of the fan F selected by the user is remained unchanged with respect to a value already previously selected by the user.

The neural network takes into account the temperature value $T_U$ and speed Vu selected by the user together to the internal temperature value and the temperature variation values and provides as output the triads of updated parameters shown in the following table.

Although the fan speed has not changed, the value of the fan speed is still taken into account by the neural network to obtain the updated parameters as reported in the eighth table and in the ninth table below.

Table 8

| Fuzzy sets | Updated parameters (first triad) |
|---|---|
| $F1_1$=COLD | $a_1 = 0,3989$ $b_1 = 22$ $c_1 = 1,414$ |
| $F1_2$=GOOD | $a_1 = 0,3989$ $b_1 = 24$ $c_1 = 1,414$ |
| $F1_3$=HOT | $a_1 = 0,3989$ $b_1 = 26$ $c_1 = 1,414$ |

Table 9

| Fuzzy sets | Updated parameters (second triad) |
|---|---|
| $F2_1$=SLOW | $a_2 = 0,3989$ $b_2 = 1$ $c_2 = 1,414$ |
| $F2_2$=NORMAL | $a_2 = 0,3989$ $b_2 = 2$ $c_2 = 1,414$ |
| $F2_3$=FAST | $a_2 = 0,3989$ $b_2 = 3$ $c_2 = 1,414$ |

The numerical values of the first updated parameter triad are inserted into the first equation and the numerical values of the second updated parameter triad are inserted into the second equation to obtain respectively:

- a respective first updated fuzzy data $P1_i$:

  $P1_{i1}=0,3520$,
  $P1_{i2}=0,0175$,
  $P1_{i3}=0$; and

- a respective second updated fuzzy data $P2_i$:

  $P2_{i1}0,0175$,
  $P2_{i2}=0,1295$,
  $P2_{i3}=0,3520$.

Therefore, the possible fuzzy data pairs are formed by a first updated fuzzy data belonging to the first fuzzy data set and by a second updated fuzzy data belonging to the second fuzzy data set, in which a thermal condition is associated with the first updated fuzzy data, and a temperature variation is associated with the second updated fuzzy datum.

As it is clear from the tenth table and from the eleventh table shown below, the thermal conditions and the temperature variations are respectively the same thermal conditions and the same temperature variations shown in table 6 but some numerical values associated with the fuzzy sets relating to the state control valve V and some numerical values associated with the fuzzy sets related to the fan speed F have changed.

Table 10

| Thermal condition | Temperature variation |
|---|---|
| COLD | SLOW |
| COLD | MEDIUM |
| COLD | FAST |

(continued)

| Thermal condition | Temperature variation |
|---|---|
| GOOD | SLOW |
| GOOD | MEDIUM |
| GOOD | FAST |
| HOT | SLOW |
| HOT | MEDIUM |
| HOT | FAST |

The application of the inferential rules to each pair of data formed by an updated thermal condition and a temperature variation (to which respective updated fuzzy data are associated) allows to obtain the results shown in the eleventh table below.

Table 11

| Inferential rules | | | |
|---|---|---|---|
| Thermal condition | Temperature variation | State of the control valve | Speed of the fan |
| COLD | SLOW | OPEN1=0,0175 | SPEED1=0,0175 |
| COLD | MEDIUM | OPEN2=0,1295 | SPEED1=0,1295 |
| COLD | FAST | OPEN3=0,3520 | SPEED1 =0,3520 |
| GOOD | SLOW | CLOSED=0,0175 | SPEED0=0,0175 |
| GOOD | MEDIUM | OPEN1=0,0175 | SPEED1=0,0175 |
| GOOD | FAST | OPEN2=0,0175 | SPEED1=0,0175 |
| HOT | SLOW | OPEN1=0 | SPEED1=0 |
| HOT | MEDIUM | OPEN2=0 | SPEED1=0 |
| HOT | FAST | OPEN3=0 | SPEED1=0 |

By comparing table 11 with table 7, the numerical values of some third updated fuzzy data referring to the status of the control valve V and the numerical values of some fourth updated fuzzy data referring to the fan speed have changed.
One or more updated numerical values can correspond to each fuzzy set that identifies a degree of belonging of the control valve and to each fuzzy set that identifies a degree of belonging of the fan speed.
The updated numerical values associated with each degree of belonging to both the control valve and the fan speed are shown below:

OPEN1 = 0,0175; 0,0175; 0,
OPEN2 = 0,1295; 0,0175; 0,
OPEN3 = 0,3520; 0; 0,
CLOSED = 0; 0,0175; 0,
SPEED0 = 0,0175,
SPEED1 = 0,0175; 0,1295;0,3520; 0,0175; 0,0175; 0; 0; 0.

Below the maximum value for each degree of belonging mentioned above is shown:

OPEN1 = OR(0,0175; 0,0175; 0) = 0,0175,
OPEN2 = OR(0,1295; 0,0175; 0) = 0,1295,
OPEN3 = OR(0,3520; 0; 0) = 0,3520,
CLOSED = OR(0; 0,0175; 0) = 0,0175,
SPEED0 = 0,0175,
SPEED1 = OR(0,0175; 0,1295;0,3520; 0,0175; 0,0175; 0; 0; 0) = 0,3520.

16

By applying the defuzzification equations according to the method called "mean of the maxima", the following numerical values are obtained in the real domain:

VALVE = 10V,
FAN = 8V.

The numerical value associated with the state of the control valve V and the numerical value associated with the fan speed F have changed with respect to the numerical values mentioned above (i.e. 1.5V for the valve and 5V for the fan).

Each numerical value associated with the state of the control valve V and each numerical value associated with the fan speed F are expressed in Volts.

Finally, the control logic unit 4 will generate a signal to control the control valve V and a further signal to control said adjusting means A of said air conditioning unit U (taking into account the information obtained by applying the inferential rules to the updated fuzzy data pairs) in order to check the thermal comfort of an environment in which a user is present, based on the user's needs.

In particular, said signal and said further signal are respective voltage signals.

## Advantages

Advantageously, through the control system object of the invention, it is possible to control the thermal comfort level inside an environment taking into account of the needs of a user inside said environment.

In particular, the use of a neuro-fuzzy controller using a fuzzy logic in combination with a neural network allows an adaptive control of the thermal comfort level.

A second advantage is given by the fact that the control system is adapted to control the thermal comfort reducing the energy consumption by means of an appropriate use of the resources available to said user.

A third advantage is given by the fact that the control system object of the invention can be easily used both by a user and by an operator assigned to the maintenance and management of said control system.

A fourth advantage is to offer the user the possibility of actively participating in the definition of the thermal comfort conditions of the control system, modifying the values of parameters useful for determining the thermal comfort.

A further advantage is given by the possibility of reducing the differences between what is described by the rules on well-being and the real perception of well-being by a user, without distorting the indications imposed by these rules.

The present invention has been described for illustrative, but not limitative purposes, according to its preferred embodiment, but it is to be understood that variations and/or modifications can be carried out by a skilled in the art, without departing from the scope thereof, as defined according to enclosed claims.

## Claims

1. Control system adapted for controlling at least one air conditioning unit (U) positioned in an environment and through which the thermal comfort of said environment is controlled, said air conditioning unit (U) being of the type comprising a fan (F), adjusting means (A) for adjusting the speed of said fan (F), a control valve (V) for controlling the flow rate of a thermovector fluid over time, said control system comprising:

   - temperature detecting means (1), to be installed in said environment, configured to detect a respective value of internal temperature $T_{INi}$ of said environment for a plurality of predetermined time periods $\Delta t_{REFi}$, with i=1,...,N, wherein N is a positive integer,
   - a user interface module (2) configured to allow a user to select a temperature value Tu and a speed value Vu of the fan (V),
   - storage means (3),
   - a logic control unit (4) configured to:

     ○ acquire a value of internal temperature $T_{INi}$ from said temperature detecting means (1) for a respective predetermined time period $\Delta t_{REFi}$, as well as said temperature value $T_U$ and said speed value $V_U$ from said user interface module (2),
     ○ calculate one or more values of temperature variations $\delta T_{Dj}$, with j=1,...,M, wherein M is a positive integer and j is the number of predetermined time periods, and wherein each value of temperature variation $\delta T_{Dj}$ is obtained by the subtraction between the value of internal temperature $T_{INi}$ in a predetermined time period and the value of internal temperature $T_{INi-1}$ in the previous predetermined time period;
     ○ store in said storage means (3):

the values of internal temperature $T_{INi}$ referred to at least two predetermined time periods $\Delta t_{REFi}$ and said one or more values of temperature variation $\delta T_{Dj}$, as well as said temperature value $T_U$ and said speed value $V_U$,

a first group of fuzzy sets F1 comprising a plurality of fuzzy sets $F1_1, F1_2 ... F1_N$, each of which identifies a respective degree of belonging of a value of internal temperature $T_{INi}$,

a second group of fuzzy sets F2 comprising a plurality of fuzzy sets $F2_1, F2_2 ... F2_N$, each of which identifies a respective degree of belonging of a value of temperature variation $\delta T_{Dj}$,

a third group of fuzzy sets F3 comprising a plurality of fuzzy sets $F3_1, F3_2 ... F3_N$, each of which identifies a respective degree of belonging of an opening state of the control valve (V),

a fourth group of fuzzy sets F4 comprising a plurality of fuzzy sets $F4_1, F4_2 ... F4_N$, each of which identifies a respective degree of belonging of a value of the speed of the fan (F),

a plurality of predetermined inferential rules that establish on the basis of the degree of belonging of each value of internal temperature $T_{INi}$ and the degree of belonging of each value of temperature variation $\delta T_{Dj}$, the degree of belonging of the opening state of the control valve (V) and the degree of belonging of the speed of the fan (F),

o perform a respective fuzzification referred to:

each value of internal temperature $T_{INi}$ to obtain a respective first fuzzy data set $P1_i$ comprising a respective plurality of first fuzzy data $P1_{i1}, P1_{i2} ... P1_{iN}$, wherein each first fuzzy data identifies a respective degree of belonging of said value of internal temperature $T_{INi}$, and is obtained by means of a predetermined first equation defined by a plurality of parameters,

each value of temperature variation $\delta T_{Dj}$ to obtain a respective second fuzzy data set $P2_i$ comprising a respective plurality of second fuzzy data $P2_{i1}, P2_{i2} ... P2_{iN}$, wherein each second fuzzy data identifies a respective degree of belonging of said value of temperature variation $\delta T_{Dj}$, and is obtained by means of a predetermined second equation defined by a plurality of further parameters,

∘ apply said predetermined inferential rules to each pair of fuzzy data formed by a first fuzzy data $P1_{i1}, P1_{i2} ... P1_{iN}$ and a second fuzzy data $P2_{i1}, P2_{i2} ... P2_{iN}$ to obtain a respective third fuzzy data set $P3_i$ comprising a plurality of third fuzzy data $P3_{i1}, P3_{i2} ... P3_{iN}$, wherein each third fuzzy data identifies a respective degree of belonging of said opening state of the control valve (V) with a respective fuzzy data set associated with said third fuzzy data of said third fuzzy data set $P3_i$, and a respective fourth fuzzy data set $P4_i$ comprising a plurality of fourth fuzzy data $P4_{i1}, P4_{i2} ... P4_{iN}$, wherein each fourth fuzzy data identifies a respective degree of belonging of said value of the speed of the fan (F) with respect to a respective further fuzzy data set associated with said fourth fuzzy data of said fourth fuzzy data set $P4_i$,

∘ perform a respective defuzzification referred to:

said fuzzy data set associated with to said third fuzzy data of said third fuzzy data set $P3_i$ to obtain a first real number $R1$ indicating if the control valve (V) is to be open and how much to open or if it is to be closed, said further fuzzy data set associated with said fourth fuzzy data of said fourth fuzzy data set $P4_i$ to obtain a second real number $R2$ indicating the speed of the fan (F),

∘ perform a neural network comprising:

an input layer comprising a plurality of input nodes ($N_{IN1}, N_{IN2}, N_{IN3}, N_{IN4}$), and an output layer comprising a respective first group of output nodes ($N_{OUT1F11}, N_{OUT2F11} ... N_{OUTNF11}$; $N_{OUT1F12}, N_{OUT2F12} ... N_{OUTNF12}$; ... $N_{OUT1F1N}, N_{OUT2F1N} ... N_{OUTNF1N}$) for each fuzzy set $F1_1, F1_2 ... F1_N$ of the first group of fuzzy sets F1, as well as a respective second group of output nodes ($N_{OUT1F21}, N_{OUT2F21} ... N_{OUTNF21}$; $N_{OUT1F22}, N_{OUT2F22} ... N_{OUTNF22}$; ... $N_{OUT1F2N}, N_{OUT2F2N} ... N_{OUTNF2N}$) for each fuzzy set $F2_1, F2_2 ... F2_N$ of the second group of fuzzy sets F2, wherein said neural network is configured to:

• receive over time said value of internal temperature $T_{INi}$, said value of temperature variation $\delta T_{Dj}$, said temperature value Tu and said speed value Vu at a respective input layer ($N_{IN1}, N_{IN2}, N_{IN3}, N_{IN4}$), and

• provide as output the updated parameters for said predetermined first equation at a respective output node of each first group of output nodes, and the further updated parameters for said predetermined second equation at a respective output node of each second group of output nodes,

∘ insert said updated parameters in said predetermined first equation to obtain a first updated fuzzy data $P1_i$ and said further updated parameters in said predetermined second equation to obtain a second updated fuzzy data $P2_i$,

○ apply said predetermined inferential rules to each pair of fuzzy data formed by a first updated fuzzy data $P1_i$ and a second updated fuzzy data $P2_i$, so as to obtain a third updated fuzzy data $P3_i$ associated with the control valve (V) and a fourth updated fuzzy data $P4_i$ associated with the speed of the fan (F), as well as to obtain an updated first real number $R1$ and an updated second real number $R2$, through defuzzification;

○ generate a signal to control said control valve (V) containing an information concerning said first real number $R1$ or said updated first real number $R1$ for opening/closing the control valve (V) and a further signal to control said adjusting means (A) containing an information concerning said second real number $R2$ or said updated second real number $R2$ for the speed of the fan (F).

2. Control system according to the previous claim,

wherein

with reference to the fuzzification referred to each value of internal temperature $T_{INi}$, said predetermined first equation is defined by a first triad of parameters $a_1$, $b_1$, $c_1$ and represents a Gaussian curve:

$$P1_i = a_1 \cdot e^{-\frac{(x_i - b_1)^2}{c_1{}^2}}$$

where

the parameter $a_1$ is a predetermined number greater than 0 and less than or equal to 1 and represents the height of the Gaussian curve;

the parameter $b_1$ is a predetermined value of temperature in which the Gaussian curve is centred;

the parameter $c_1$ is a predetermined value indicating the distance between a symmetry axis of the Gaussian curve and an inflection point of the Gaussian curve; and

$x_i$ is a respective value of internal temperature $T_{INi}$,

wherein

with reference to the fuzzification referred to each value of temperature variation $\delta T_{Dj}$, said predetermined second equation is defined by a second triad of parameters $a_2$, $b_2$, $c_2$ and represents a Gaussian curve:

$$P2_i = a_2 \cdot e^{-\frac{(x_j - b_2)^2}{c_2{}^2}}$$

where

the parameter $a_2$ is a predetermined number greater than 0 and less than or equal to 1 and represents the height of the Gaussian curve;

the parameter $b_2$ is a predetermined value of temperature in which the Gaussian curve is centred;

the parameter $c_2$ is a predetermined value indicating the distance between a symmetry axis of the Gaussian curve and an inflection point of the Gaussian curve; and

$x_j$ is a respective value of temperature variation $\delta T_{Dj}$.

3. Control system according to the claim 2,

wherein

each first group of output nodes ($N_{OUT1F11}$, $N_{OUT2F11}$...$N_{OUTNF11}$;$N_{OUT1F12}$,$N_{OUT2F12}$...$N_{OUTNF12}$;...$N_{OUT1F1N}$,$N_{OUT2F1N}$...$N_{OUT\ NF1N}$) comprising three respective output nodes ($N_{OUT1F11}$, $N_{OUT2F11}$,$N_{OUT3F11}$; $N_{OUT1F12}$,$N_{OUT2F12}$,$N_{OUT3F12}$;...$N_{OUT1FI1N}$,$N_{OUT2F1N}$,$N_{OUT3F1N}$) and said neural network is configured to provide at each output node of said first group of output nodes a respective updated parameter $a_1$, $b_1$, $c_1$, so as to obtain a respective first triad of updated parameters $a_1$, $b_1$, $c_1$, and

said logic control unit (4) is configured to insert said first triad of updated parameters $a_1$, $b_1$, $c_1$ in said predetermined first equation to obtain a first updated fuzzy data $P1_i$;

wherein

each second group of output nodes ($N_{OUT1F21}$,$N_{OUT2F21}$...$N_{OUTNF21}$; $N_{OUT1F22}$,$N_{OUT2F22}$...$N_{OUTNF22}$;...$N_{OUT1F2N}$, $N_{OUT2F2N}$...$N_{OUTNF2N}$) comprising three respective output nodes ($N_{OUT1F21}$,$N_{OUT2F21}$,$N_{OUT3F21}$;$N_{OUT1F21}$,$N_{OUT2F21}$,$N_{OUT3F21}$;...$N_{OUT1F2N}$,$N_{OUT2F2N}$, $N_{OUT3F2N}$) and said neural network is configured to provide at each output node of said second group of output nodes a respective updated

parameter $a_2$, $b_2$, $c_2$, so as to obtain a second triad of updated parameters $a_2$, $b_2$, $c_2$, and
said logic control unit (4) is configured to insert said second triad of updated parameters $a_2$, $b_2$, $c_2$ in said predetermined second equation to obtain a second updated fuzzy data $P2_i$.

4. Control system according to claim 2 or 3, wherein

the defuzzification referred to said fuzzy data set associated with said third fuzzy data of said third fuzzy data set $P3_i$ is performed trough a method called mean of maxima and the logic control unit (4) is configured to:

○ select a maximum value $P3_{iMAX}$ with respect to each third fuzzy data $P3_{i1}, P3_{i2}...P3_{iN}$, wherein said maximum value is associated with at least one fuzzy set $F3_1, F3_2...F3_N$ of the third group of fuzzy sets F3,
○ calculate at least two real numbers $P3_1$, $P3_i$ applying a predetermined third equation defined by a third triad of parameters $a_3$, $b_3$, $c_3$:

$$x^2 - 2\,b_3\,x + b_3{}^2 + c_3{}^2 \ln \frac{P3_{iMAX}}{a_3} = 0$$

wherein

the parameter $a_3$ is a number greater than 0 and less than or equal to 1 and represents the height of a Gaussian curve;
the parameter $b_3$ is a value of temperature in which a Gaussian curve is centred;
the parameter $c_3$ is the value of the distance between a symmetry axis of a Gaussian curve and an inflection point of said Gaussian curve; and $x$ is a value that P3 can assume;

○ calculate said first real number $R1$ equal to the mean value of said at least two real numbers $P3_1$, $P3_2$; and

wherein
the defuzzification referred to said further fuzzy data associated with said fourth fuzzy data of said fourth fuzzy data set $P4_i$ is performed through a method called mean of maxima and the logic control unit (4) is configured to:

○ select a maximum value $P4_{iMAX}$ with respect to each fourth fuzzy data $P4_{i1}, P4_{i2}...P4_{iN}$, wherein said maximum value is associated with at least one fuzzy set $F4_1, F4_2...F4_N$ of the fourth group of fuzzy sets F4,
○ calculate at least two reals number $P4_1$, $P4_2$ applying the following predetermined fourth equation defined by a forth triad of parameters $a_4$, $b_4$, $c_4$:

$$x^2 - 2\,b_4\,x + b_4{}^2 + c_4{}^2 \ln \frac{P4_{iMAX}}{a_4} = 0$$

where

the parameter $a_4$ is a number greater than 0 and less than or equal to 1 and represents the height of a Gaussian curve;
the parameter $b_4$ is a value of temperature in which a Gaussian curve is centred;
the parameter $c_4$ is the value of the distance between a symmetry axis of a Gaussian curve and an inflection point of said Gaussian curve; and $x$ is the value that P4 can assume;

calculate said second real number $R2$ equal to the mean value of said at least two real numbers $P4_1$, $P4_2$.

5. Control system according to the previous claim, wherein

the output layer of said neural network comprises:

■ a respective third group of output nodes ($N_{OUT1F31}$, $N_{OUT2F31}...N_{OUTNF31}$; $N_{OUT1F32}, N_{OUT2F32}...N_{OUTNF32}$;... $N_{OUT1F3N}, N_{OUT2F3N}...N_{OUTNF3N}$) for each fuzzy set $F3_1, F3_2...F3_N$ of the third group of fuzzy sets F3,

- a respective fourth group of output nodes ($N_{OUT1F41}, N_{OUT2F41}...N_{OUTNF41};N_{OUT1F42},N_{OUT2F42}...N_{OUTNF42};...N_{OUT1F4N},N_{OUT2F4N}...N_{OUTNF4N}$) for each fuzzy set $F4_1,F4_2...F4_N$ of the fourth group of fuzzy sets F4,

wherein
said neural network is configured to provide as output:

the updated parameters $a_3, b_3, c_3$ of said third triad of parameters for said predetermined third equation, each of which is at a respective output node of each third group of output nodes,
the updated parameters $a_4, b_4, c_4$ of said fourth triad of parameters for said predetermined fourth equation, each of which is at an output node of each fourth group of output nodes,

wherein
said logic control unit (4) is configured to:

○ insert said third triad of updated parameters $a_3, b_3, c_3$ in said predetermined third equation to obtain an updated fuzzy data set, due to the change of the shape of the function represented by said predetermined third equation, wherein said updated fuzzy data set is associated with said third fuzzy data of said third fuzzy data set $P3_i$,
○ insert said fourth triad of updated parameters $a_4, b_4, c_4$ in said predetermined fourth equation to obtain an updated further fuzzy data set, due to the change of the shape of the function represented by said predetermined fourth equation, wherein said updated further fuzzy data set is associated with said fourth fuzzy data of said fourth fuzzy data set $P4_i$,

defuzzify each updated fuzzy data set and each updated further fuzzy data set.

6. Control system according to the previous claim, wherein

each third group of output nodes ($N_{OUT1F31}, N_{OUT2F31}...N_{OUTNF31};N_{OUT1F32},N_{OUT2F32}...N_{OUTNF32};...N_{OUT1F3N},N_{OUT2F3N}...N_{OUTNF3N}$) comprises three output nodes ($N_{OUT1F31}, N_{OUT2F31}, N_{OUT3F31};N_{OUT1F32},N_{OUT2F32},N_{OUT3F32};...N_{OUT1F3N},N_{OUT2F3N},N_{OUT3F3N}$) and said neural network is configured to provide a respective updated parameter $a_3, b_3, c_3$ for said third equation at each output node of said third group of output nodes, so as to obtain a respective third triad of updated parameters $a_3, b_3, c_3$ for each third group of output nodes, and
said logic control unit (4) is configured to insert said updated parameters $a_3, b_3, c_3$ in said predetermined third equation to obtain an updated fuzzy data set, due to the change of the shape of the function represented by said predetermined third equation, wherein said updated fuzzy data set is associated with said third fuzzy data of said third fuzzy data set $P3_i$, wherein
each fourth group of output nodes ($N_{OUT1F41}, N_{OUT2F41}...N_{OUTNF41};N_{OUT1F42},N_{OUT2F42}...N_{OUTNF42};...N_{OUT1F4N},N_{OUT2F4N}...N_{OUT NF4N}$) comprises three respective output nodes ($N_{OUT1F41},N_{OUT2F41},N_{OUT3F41};N_{OUT1F42},N_{OUT2F42}...N_{OUTNF42};...N_{OUT1F4N},N_{OUT2F4N}...NOUTNF4N$), in which a respective updated parameter $a_4, b_4, c_4$ is present, so as to obtain a respective fourth triad of updated parameters $a_4, b_4, c_4$ for each fourth group of output nodes, and
said logic control unit (4) is configured to insert said updated parameters $a_4, b_4, c_4$ in said predetermined fourth equation to obtain an updated further fuzzy data set, due to the change of the shape of the function represented by said predetermined fourth equation, wherein said updated further fuzzy data set is associated with said fourth fuzzy data of said fourth fuzzy data set $P4_i$.

7. Control system according any one of the previous claims, wherein said neural network is Kohonen network and said input layer ($N_{IN2}$) for receiving said value of temperature Tu selected by the user and said input layer ($N_{IN3}$) for receiving said value of speed Vu of the fan (F) selected by the user are arranged between said input node ($N_{IN1}$) for receiving a value of internal temperature $T_{INi}$ and said input node ($N_{IN4}$) for receiving a value of temperature variation $\delta T_{Dj}$.

8. Control system according to the claim 1, wherein said predetermined first equation for the fuzzification of each value of internal temperature $T_{INi}$ is any one function identifying a degree of belonging to a fuzzy set of the first group of fuzzy sets, and
said predetermined second equation for the fuzzification of each value of temperature variation $\delta T_{Dj}$ is any one function identifying a degree of belonging to a fuzzy set of the second group of fuzzy sets.

9. Control system according to any one of claims 1-3, wherein said defuzzification is performed by means of one of the following methods: last of maxima, center of sums, center of area, center of inertia, center of gravity.

10. Control System according to any one of the previous claims, wherein Said first group of fuzzy sets F1 comprises at least three fuzzy sets $F1_1, F1_2, F1_3$, so that at least three numbers identifying a respective degree of belonging to a fuzzy set of said first group of fuzzy sets F1 are associated with to each value of internal temperature $T_{INi}$, wherein
said second group of fuzzy sets F2 comprises at least three fuzzy sets $F2_1, F2_2, F2_3$, so that at least three numbers identifying a respective degree of belonging to a fuzzy set of said second group of fuzzy sets F2 are associated to each value of temperature variation $\delta T_{Dj}$.

11. Control system according to any one of the previous claims, wherein said third group of fuzzy sets F3 comprises at least four fuzzy sets $F3_1, F3_2, F3_3, F3_4$: a first fuzzy set $F3_1$ to identify a first opening state of the control valve (4), a second fuzzy set $F3_2$ to identify a second opening state of the control valve (V), different from said first opening state, a third set fuzzy $F3_3$ to identify a third opening state of the control valve (V), different from said first opening state and said second opening state, and a fourth fuzzy set $F3_4$ to identify a closing state of the control valve (V).

12. Control system according to any one of claims 1-11, wherein, when said adjusting means (A) to adjust the speed of the fan (F) comprise an inverter, said fourth group of fuzzy sets F4 comprises at least four fuzzy sets $F4_1, F4_2, F4_3, F4_4$: a first fuzzy set $F4_1$ to identify a first speed of the fan (F), a second fuzzy set $F4_2$ to identify a second speed of the fan (F), different from said first speed, a third fuzzy set $F4_3$ to identify a third speed of the fan (F), different from said first speed and from said second speed, and a fourth fuzzy set $F4_4$ to identify a fourth speed of the fan (F) equal to zero; said first real number $R1$ being preferable greater than 0 and less than or equal to 10, and said second real number $R2$ being preferable greater than 0 and less than 10.

13. Control system according to any one of claims 1-11, wherein, when said adjusting means (A) to adjust the speed of the fan (F) comprises one or more relay, said fourth group of fuzzy sets F4 comprises two respective fuzzy sets $F4_1, F4_2$ for each relay: a first fuzzy set $F4_1$ to identify a first speed of the fan (F) equal to zero and a second fuzzy set $F4_2$ to identify a second speed, different from said first speed; said first real number $R1$ being preferable greater than 0 and less than or equal to 10, and said second real number $R2$ being preferable greater than 0 and less than 10.

14. Air conditioning unit (U) comprising a control system according to any one of the previous claims.

15. Method for controlling, through the control system according to any one of the claims 1-14, at least one air conditioning unit (U) positioned in an environment and through which the thermal comfort of said environment is controlled, said air conditioning unit (U) being of the type comprising a fan (F), adjusting means (A) for adjusting the speed of said fan (F), a control valve (V) for controlling the flow rate of a thermovector fluid over time, said method comprising the following steps:

    ○ acquiring a value of internal temperature $T_{INi}$ for a respective predetermined time period $\Delta t_{REFi}$, as well as said value of temperature $T_U$ and said value of speed $V_U$ from said user interface module (2);
    ○ calculating one or more values of temperature variation $\delta T_{Dj}$, with j=1,...,M, where M is a positive integer and j is the number of predetermined time periods, and wherein each value of temperature variation $\delta T_{Dj}$ is obtained by the subtraction between the value of internal temperature $T_{INi}$ in a predetermined time period and the value of internal temperature $T_{INi-1}$ in the previous predetermined time period;
    ○ storing:

        the values of internal temperature $T_{INi}$ referred to at least two predetermined time periods $\Delta_{REFi}$ and said one or more values of temperature variation $\delta T_{Dj}$, as well as said temperature value $T_U$ and said value of speed $V_U$;
        a first group of fuzzy sets F1 comprising a plurality of fuzzy sets $F1_1, F1_2...F1_N$, each of which identifies a respective degree of belonging of a value of internal temperature $T_{INi}$;
        a second group of fuzzy sets F2 comprising a plurality of fuzzy sets $F2_1, F2_2...F2_N$, each of which identifies a respective degree of belonging of a value of temperature variation $\delta T_{Dj}$;
        a third group of fuzzy sets F3 comprising a plurality of fuzzy sets $F3_1, F3_2...F3_N$, each of which identifies a respective degree of belonging of an opening state of the control valve (V);

a fourth group of fuzzy sets F4 comprising a plurality of fuzzy sets $F4_1, F4_2 \dots F4_N$, each of which identifies a respective degree of belonging of a value of the speed of the fan (F);

a plurality of predetermined inferential rules that establish on the basis of the degree of belonging of each value of internal temperature $T_{INi}$ and the degree of belonging of each value of temperature variation $\delta T_{Dj}$, the degree of belonging of the opening state of the control valve (V) and the degree of belonging of the speed of the fan (F),

∘ performing a respective fuzzification referred to:

each value of internal temperature $T_{INi}$ to obtain a respective first fuzzy data set $P1_i$ comprising a respective plurality of first fuzzy data $P1_{i1}, P1_{i2} \dots P1_{iN}$, wherein each first fuzzy data identifies a respective degree of belonging of said value of internal temperature $T_{INi}$, and is obtained by means of a predetermined first equation defined by a plurality of parameters;

each value of temperature variation $\delta T_{Dj}$ to obtain a respective second fuzzy data set $P2_i$ comprising a respective plurality of second fuzzy data $P2_{i1}, P2_{i2} \dots P2_{iN}$, wherein each second fuzzy data identifies a respective degree of belonging of said value of temperature variation $\delta T_{Dj}$, and is obtained by means of a predetermined second equation defined by a plurality of further parameters,

∘ applying said predetermined inferential rules to each pair of fuzzy data formed by a first fuzzy data $P1_{i1}, P1_{12} \dots P1_{iN}$ and a second fuzzy data $P2_{i1}, P2_{i2} \dots P2_{iN}$ to obtain a respective third fuzzy data set $P3_i$ comprising a plurality of third fuzzy data $P3_{i1}, P3_{i2} \dots P3_{iN}$, wherein each third fuzzy data identifies a respective degree of belonging of said opening state of the control valve (V) with respect to a respective fuzzy data set associated with said third fuzzy data of said third fuzzy data set $P3_i$, and a respective fourth fuzzy data set $P4_i$ comprising a plurality of fourth fuzzy data $P4_{i1}, P4_{i2} \dots P4_{iN}$, wherein each fourth fuzzy data identifies a respective degree of belonging of said value of said speed of the fan (F) with respect to a respective further fuzzy data set associated with said fourth fuzzy data of said fourth fuzzy data set $P4_i$,

∘ performing a respective defuzzification referred to:

said fuzzy data set associated with said third fuzzy data of said third fuzzy data set $P3_i$ to obtain a first real number R1 indicating if the control valve (V) is to be open and how much to open or if it is to be closed,

said further fuzzy data set associated with said fourth fuzzy data of said fourth fuzzy data set $P4_i$ to obtain a second real number R2 indicating the speed of the fan (F),

∘ receiving over time a value of internal temperature $T_{INi}$, a value of temperature variation $\delta T_{Dj}$, a temperature value Tu and a speed value Vu at a respective input node $(N_{IN1}, N_{IN2}, N_{IN3}, N_{IN4})$ of said neural network;

∘ providing as output the updated parameters for said predetermined first equation at a respective output node of each first group of output nodes of said neural network, and the further updated parameters for said predetermined second equation at a respective output node of each second group of output nodes of said neural network;

∘ inserting said updated parameters in said predetermined first equation to obtain a first updated fuzzy data $P1_i$ and said further updated parameters in said predetermined second equation to obtain a second updated fuzzy data $P2_i$,

∘ applying said predetermined inferential rules to each pair of fuzzy data formed by a first updated fuzzy data $P1_i$ and a second updated fuzzy data $P2_i$, so as to obtain a third updated fuzzy data $P3_i$ associated with the control valve (V) and a fourth updated fuzzy data $P4_i$ associated with the speed of the fan (F), as well as to obtain an updated first real number $R1$ or a second real number $R2$, through defuzzification;

∘ generating a signal to control said control valve (V) containing an information concerning said first real number $R1$ or said updated first real number $R1$ for opening/closing the control valve (V) and a further signal to control said adjusting means (A) containing an information concerning said second real number $R2$ or said updated second real number $R2$ for the speed of the fan (F).

**Patentansprüche**

1. Kontrollsystem angepasst

zur Steuerung mindestens eines Klimagerätes (U) die in einer Umgebung positioniert ist und durch die der thermische Komfort der Umgebung gesteuert wird, wobei die Klimatisierungseinheit (U) von dem Typ ist, der einen Ventilator (F), eine Einstelleinrichtung (A) zum Einstellen der Geschwindigkeit des Ventilators (F) und ein Steuerventil (V) zum Steuern der Durchflussmenge eines Thermovektorfluids über die Zeit umfasst, wobei das Steuersystem umfasst:

- Temperaturerfassungsmittel (1), das in der Umgebung zu installieren ist und so konfiguriert ist, dass es einen jeweiligen Wert der Innentemperatur $T_{INi}$ der Umgebung für eine Vielzahl von vorbestimmten Zeitperioden $\Delta t_{REFi}$ erfasst, wobei i=1,...,N, wobei N eine positive ganze Zahl ist,
- ein Benutzerschnittstellenmodul (2), das so konfiguriert ist, dass ein Benutzer einen Temperaturwert $T_U$ und einen Geschwindigkeitswert $V_U$ des Ventilators (V) auswählen kann,
- Speichermittel (3),
- eine Logiksteuereinheit (4), die so konfiguriert ist, dass sie:

  o Erfassen eines Wertes der Innentemperatur $T_{INi}$ von den Temperaturerfassungsmitteln (1) für eine entsprechende vorbestimmte Zeitspanne $\Delta t_{REFi}$ sowie des Temperaturwertes $T_U$ und des Geschwindigkeitswertes $V_U$ von dem Benutzerschnittstellenmodul (2),
  o Berechnen eines oder mehrerer Werte von Temperaturänderungen $\delta T_{Dj}$, mit j=1,...,M, wobei M eine positive ganze Zahl und j die Anzahl der vorbestimmten Zeitperioden ist, und wobei jeder Wert der Temperaturänderung $\delta T_{Dj}$ durch die Subtraktion zwischen dem Wert der Innentemperatur $T_{INi}$ in einer vorbestimmten Zeitperiode und dem Wert der Innentemperatur $T_{INi-1}$ in der vorhergehenden vorbestimmten Zeitperiode erhalten wird;
  o Speichern in der Speichereinrichtung (3):

die Werte der Innentemperatur $T_{iNi}$ bezogen auf mindestens zwei vorbestimmte Zeiträume $\Delta t_{REFi}$ und den einen oder die mehreren Werte der Temperaturänderung $\delta T_{Dj}$ sowie den Temperaturwert $T_U$ und den Geschwindigkeitswert $V_U$,
eine erste Gruppe von Fuzzy-Mengen F1, die eine Vielzahl von Fuzzy-Mengen $F1_1, F1_2 ... F1_N$ umfasst, von denen jede einen jeweiligen Grad der Zugehörigkeit zu einem Wert der Innentemperatur $T_{INi}$ identifiziert, eine zweite Gruppe von Fuzzy-Mengen F2, die eine Vielzahl von Fuzzy-Mengen $F2_1, F2_2 ... F2_N$ umfasst, von denen jede einen jeweiligen Grad der Zugehörigkeit zu einem Wert der Temperaturänderung $\delta T_{Dj}$ identifiziert, eine dritte Gruppe von Fuzzy-Mengen F3, die eine Vielzahl von Fuzzy-Mengen $F3_1, F3_2 ... F3_N$ umfasst, von denen jede einen jeweiligen Grad der Zugehörigkeit zu einem Öffnungszustand des Steuerventils (V) identifiziert,
eine vierte Gruppe von Fuzzy-Mengen F4, die eine Vielzahl von Fuzzy-Mengen $F4_1, F4_2 ... F4_N$ umfasst, von denen jede einen entsprechenden Grad der Zugehörigkeit eines Wertes der Geschwindigkeit des Ventilators (F) identifiziert,
eine Vielzahl vorbestimmter Folgerungsregeln, die auf der Grundlage des Zugehörigkeitsgrades jedes Wertes der Innentemperatur $T_{INi}$ und des Zugehörigkeitsgrades jedes Wertes der Temperaturschwankung $\delta T_{Dj}$ den Zugehörigkeitsgrad des Öffnungszustandes des Steuerventils (V) und den Zugehörigkeitsgrad der Drehzahl des Ventilators (F) bestimmen,

  o eine entsprechende Fuzzifizierung durchführen:

  jeden Wert der Innentemperatur $T_{INi}$, um einen jeweiligen ersten Fuzzy-Datensatz $P1_i$ zu erhalten, der eine jeweilige Mehrzahl von ersten Fuzzy-Daten $P1_{i1}, P1_{i2} ... P1_{iN}$, wobei jedes erste Fuzzy-Datum einen entsprechenden Grad der Zugehörigkeit des Wertes der Innentemperatur $T_{INi}$ identifiziert und mittels einer vorbestimmten ersten Gleichung erhalten wird, die durch eine Vielzahl von Parametern definiert ist,
  jeden Wert der Temperaturschwankung $\delta T_{Dj}$ um einen jeweiligen zweiten Fuzzy-Datensatz $P2_i$ zu erhalten der eine jeweilige Vielzahl von zweiten Fuzzy-Daten $P2_{i1}, P2_{i2} ... P2_{iN}$, wobei jeder zweite Fuzzy-Datensatz einen jeweiligen Grad der Zugehörigkeit des Wertes der Temperaturvariation $\delta T_{Dj}$ identifiziert und mittels einer vorbestimmten zweiten Gleichung erhalten wird, die durch eine Vielzahl weiterer Parameter definiert ist,

  o Anwenden der vorbestimmten Schlußfolgerungsregeln auf jedes Paar von Fuzzy-Daten, das durch erste Fuzzy-Daten $P1_{i1}, P1_{i2} ... P1_{iN}$ und zweite Fuzzy-Daten $P2_{i1}, P2_{i2} .. P2_{in}$, gebildet wird, um einen entsprechenden dritten Fuzzy-Datensatz $P3_i$ zu erhalten, der eine Vielzahl von dritten Fuzzy-Daten $P3_{i1}, P3_{i2} ... P3_{iN}$, wobei jedes dritte Fuzzy-Datum einen jeweiligen Grad der Zugehörigkeit des Öffnungszustandes des Steuerventils (V) zu einem jeweiligen Fuzzy-Datensatz identifiziert, der den dritten Fuzzy-Daten des dritten Fuzzy-Datensatzes $P3_i$ zugeordnet ist, und einen jeweiligen vierten Fuzzy-Datensatz $P4_i$, der eine Mehrzahl

von vierten Fuzzy-Daten P4$_{i1}$,P4$_{i2}$...P4$_{iN}$, wobei jedes vierte Fuzzy-Datum einen jeweiligen Grad der Zugehörigkeit des Wertes der Geschwindigkeit des Ventilators (F) in bezug auf einen jeweiligen weiteren Fuzzy-Datensatz identifiziert, der mit den vierten Fuzzy-Daten des vierten Fuzzy-Datensatzes P4$_i$ verbunden ist,

○ eine entsprechende Defuzzifizierung durchführen:

der Fuzzy-Datensatz, der den dritten Fuzzy-Daten des dritten Fuzzy-Datensatzes P3$_i$ zugeordnet ist, um eine erste reelle Zahl $R$1 zu erhalten, die angibt, ob das Steuerventil (V) geöffnet werden soll und wie weit es geöffnet werden soll, oder ob es geschlossen werden soll, der weitere Fuzzy-Datensatz, der den vierten Fuzzy-Daten des vierten Fuzzy-Datensatzes P4$_i$ zugeordnet ist, um eine zweite reelle Zahl R2 zu erhalten, die die Geschwindigkeit des Ventilators (F) angibt,

○ ein neuronales Netz auszuführen, das Folgendes umfasst:

eine Eingabeschicht, die eine Vielzahl von Eingabeknoten (N$_{IN1}$, N$_{IN2}$, N$_{IN3}$, N$_{IN4}$) umfasst, und eine Ausgabeschicht, die eine jeweilige erste Gruppe von Ausgabeknoten (N$_{OUT1F11}$, N$_{OUT2F11}$...N$_{OUTNF11}$; N$_{OUT1F12}$,N$_{OUT2F12}$...N$_{OUTNF12}$;... N$_{OUT1F1N}$,N$_{OUT2F1N}$...N$_{OUTNF1N}$) für jede Fuzzymenge F1$_1$,F1$_2$...F1$_N$ der ersten Gruppe von Fuzzy-Mengen F1, sowie jeweils eine zweite Gruppe von Ausgangsknoten (N$_{OUT1F21}$,N$_{OUT2F21}$...N$_{OUTNF21}$; N$_{OUT1F22}$,N$_{OUT2F22}$...N$_{OUTNF22}$;...N$_{OUT1F2N}$,N$_{OUT2F2N}$...N$_{OUTNF2N}$) für jede Fuzzy-Menge F2$_1$,F2$_2$...F2$_N$ der zweiten Gruppe von Fuzzy-Mengen F2, wobei das neuronale Netz konfiguriert ist, um:

• den Wert der Innentemperatur $T_{INi}$, den Wert der Temperaturschwankung $\delta T_{Dj}$, den Temperaturwert T$_U$ und den Geschwindigkeitswert V$_U$ an einer jeweiligen Eingangsschicht (N$_{IN1}$, N$_{IN2}$, N$_{IN3}$, N$_{IN4}$) über die Zeit empfangen, und

• als Ausgabe die aktualisierten Parameter für die vorbestimmte erste Gleichung an einem jeweiligen Ausgangsknoten jeder ersten Gruppe von Ausgangsknoten und die weiteren aktualisierten Parameter für die vorbestimmte zweite Gleichung an einem jeweiligen Ausgangsknoten jeder zweiten Gruppe von Ausgangsknoten bereitzustellen,

○ Einsetzen der aktualisierten Parameter in die vorbestimmte erste Gleichung, um erste aktualisierte Fuzzy-Daten P1$_i$ zu erhalten, und der weiteren aktualisierten Parameter in die vorbestimmte zweite Gleichung, um zweite aktualisierte Fuzzy-Daten P2$_i$ zu erhalten,

○Anwenden der vorbestimmten Schlußfolgerungsregeln auf jedes Paar von Fuzzy-Daten, das aus einem ersten aktualisierten Fuzzy-Datenwert P1$_i$ und einem zweiten aktualisierten Fuzzy-Datenwert P2$_i$ besteht, gebildet werden, um durch Defuzzifizierung einen dritten aktualisierten Fuzzy-Datensatz P3$_i$, der dem Steuerventil (V) zugeordnet ist, und einen vierten aktualisierten Fuzzy-Datensatz P4$_i$, der der Drehzahl des Ventilators (F) zugeordnet ist, sowie eine aktualisierte erste reelle Zahl $R$1 und eine aktualisierte zweite reelle Zahl R2 zu erhalten;

○ Erzeugen eines Signals zur Steuerung des Steuerventils (V), das eine Information über die erste reelle Zahl $R$1 oder die aktualisierte erste reelle Zahl $R$1 zum Öffnen/Schließen des Steuerventils (V) enthält, und eines weiteren Signals zur Steuerung der Einstellmittel (A), das eine Information über die zweite reelle Zahl R2 oder die aktualisierte zweite reelle Zahl R2 für die Geschwindigkeit des Ventilators (F) enthält.

2. Steuersystem gemäß dem vorherigen Anspruch,
Wobei

unter Bezugnahme auf die Fuzzifizierung, die sich auf jeden Wert der Innentemperatur $T_{INi}$ bezieht, die vorbestimmte erste Gleichung durch eine erste Triade von Parametern $a_1$, $b_1$, $c_1$ definiert ist und eine Gaußsche Kurve darstellt:

$$P1_i = a_1 \cdot e^{-\frac{(x_i - b_1)^2}{c_1^2}}$$

wobei

der Parameter $a_1$ ist eine vorbestimmte Zahl größer als 0 und kleiner oder gleich 1 und stellt die Höhe der Gaußkurve dar;
der Parameter $b_1$ ist ein vorbestimmter Temperaturwert, in dem die Gaußkurve zentriert ist;
der Parameter $c_1$ ein vorbestimmter Wert ist, der den Abstand zwischen einer Symmetrieachse der Gaußkurve und einem Wendepunkt der Gaußkurve angibt; und

$x_i$ ist ein entsprechender Wert der Innentemperatur $T_{INi}$, wobei

unter Bezugnahme auf die Fuzzifizierung, die sich auf jeden Wert der Temperaturvariation $\delta T_{Dj}$ bezieht, wird die vorbestimmte zweite Gleichung durch eine zweite Triade von Parametern $a_2$, $b_2$, $c_2$ definiert und stellt eine Gaußsche Kurve dar:

$$P2_i = a_2 \cdot e^{-\frac{(x_j - b_2)^2}{c_2{}^2}}$$

wobei

der Parameter $a_2$ ist eine vorbestimmte Zahl größer als 0 und kleiner oder gleich 1 und stellt die Höhe der Gaußkurve dar;

der Parameter $b_2$ ist ein vorbestimmter Temperaturwert, in dem die Gaußkurve zentriert ist;

der Parameter $c_2$ ein vorbestimmter Wert ist, der den Abstand zwischen einer Symmetrieachse der Gaußkurve und einem Wendepunkt der Gaußkurve angibt; und

$x_j$ ist ein entsprechender Wert der Temperaturänderung $\delta T_{Dj}$.

3. Steuerungssystem nach Anspruch 2,

wobei

jede erste Gruppe von Ausgangsknoten ($N_{OUT1F11}$, $N_{OUT2F11}$...$N_{OUTNF11}$;$N_{OUT1F12}$,$N_{OUT2F12}$...$N_{OUTNF12}$;...$N_{OUT1F1N}$,$N_{OUT2F1N}$ ...$N_{OUTNF1N}$) mit jeweils drei Ausgangsknoten $N_{OUT1F11}$,$N_{OUT2F11}$,$N_{OUT3F11}$;$N_{OUT1F12}$,$N_{OUT2F12}$,$N_{OUT3F12}$;...$N_{OUT1F1N}$,$N_{OUT\ 2F1N}$,$N_{OUT3F1N}$) und das neuronale Netz so konfiguriert ist, daß es an jedem Ausgangsknoten der ersten Gruppe von Ausgangsknoten einen jeweiligen aktualisierten Parameter $a_1$, $b_1$, $c_1$ zu liefern, um eine jeweilige erste Triade von aktualisierten Parametern $a_1$, $b_1$, $c_1$ zu erhalten, und

die logische Steuereinheit (4) so konfiguriert ist, dass sie die erste Triade von aktualisierten Parametern $a_1$, $b_1$, $c_1$ in die vorbestimmte erste Gleichung einsetzt, um erste aktualisierte Fuzzy-Daten $P1_i$ zu erhalten;

wobei

jede zweite Gruppe von Ausgangsknoten ($N_{OUT1F21}$,$N_{OUT2F21}$...$N_{OUTNF21}$; $N_{OUT1F22}$,$N_{OUT2F22}$...$N_{OUTNF22}$;...$N_{OUT1F2N}$,$N_{OUT2F2N}$...$N_{OUTNF2N}$) mit jeweils drei Ausgangsknoten ($N_{OUT1F21}$,$N_{OUT2F21}$,$N_{OUT3F21}$;$N_{OUT1F21}$,$N_{OUT2F21}$,$N_{OUT3\ F21}$;...$N_{OUT1F2N}$,$N_{OUT2F2N}$,$N_{OUT3F2N}$) und das neuronale Netzwerk so konfiguriert ist, dass es an jedem Ausgangsknoten der zweiten Gruppe von Ausgangsknoten einen jeweiligen aktualisierten Parameter $a_2$, $b_2$, $c_2$ bereitstellt, um eine zweite Triade von aktualisierten Parametern $a_2$, $b_2$, $c_2$ zu erhalten, und

die logische Steuereinheit (4) so konfiguriert ist, dass sie die zweite Triade von aktualisierten Parametern $a_2$, $b_2$, $c_2$ in die vorbestimmte zweite Gleichung einsetzt, um zweite aktualisierte Fuzzy-Daten $P2_i$ zu erhalten.

4. Steuerungssystem nach Anspruch 2 oder 3, wobei

die Defuzzifizierung in Bezug auf den Fuzzy-Datensatz, der mit den dritten Fuzzy-Daten des dritten Fuzzy-Daten-satzes $P3_i$ verbunden ist, durch ein Verfahren durchgeführt wird, das als Mittelwert der Maxima bezeichnet wird, und die logische Steuereinheit (4) konfiguriert ist, um:

o Auswahl eines Maximalwerts $P3_{iMAX}$ in bezug auf jeden dritten Fuzzy-Wert $P3_{i1}$, $P3_{i2}$...$P3_{iN}$, wobei der Maximalwert mit mindestens einer Fuzzy-Menge $F3_1$, $F3_2$...$F3_N$ der dritten Gruppe von Fuzzy-Mengen $F3$ verbunden ist,

o Berechnung von mindestens zwei reellen Zahlen $P3_1$, $P3_2$ unter Anwendung einer vorgegebenen dritten Gleichung, die durch eine dritte Triade von Parametern $a_3$, $b_3$, $c_3$ definiert ist:

$$x^2 - 2\,b_3\,x + b_3{}^2 + c_3{}^2 \ln\frac{P3_{iMAX}}{a_3} = 0$$

wobei

Der Parameter $a_3$ ist eine Zahl größer als 0 und kleiner oder gleich 1 und stellt die Höhe einer Gaußkurve dar;

Der Parameter $b_3$ ist ein Temperaturwert, bei dem eine Gaußkurve zentriert ist;

der Parameter $c_3$ ist der Wert des Abstands zwischen einer Symmetrieachse einer Gaußkurve und einem Wendepunkt der Gaußkurve; und x ist ein Wert, den P3 annehmen kann;

o Berechnen der ersten reellen Zahl $R1$ gleich dem Mittelwert der mindestens zwei reellen Zahlen $P3_1$, $P3_2$; und wobei

die Defuzzifizierung in Bezug auf die weiteren Fuzzy-Daten, die mit den vierten Fuzzy-Daten des vierten Fuzzy-Datensatzes $P4_i$ verbunden sind, durch ein Verfahren durchgeführt wird, das als Mittelwert der Maxima bezeichnet wird, und die logische Steuereinheit (4) konfiguriert ist, um:

o Auswahl eines Maximalwerts $P4_{iMAX}$ in bezug auf jeden vierten Fuzzy-Datenwert $P4_{i1}$,$P4_{i2}$...$P4_{iN}$, wobei der Maximalwert mit mindestens einer Fuzzy-Menge $F4_1$, $F4_2$...$F4_N$ der vierten Gruppe von Fuzzy-Mengen F4 verbunden ist,

o Berechnung von mindestens zwei reellen Zahlen $P4_1$, $P4_2$ unter Anwendung der folgenden vorgegebenen vierten Gleichung, die durch eine vierte Triade von Parametern $a_4$, $b_4$, $c_4$ definiert ist:

$$x^2 - 2\,b_4\,x + {b_4}^2 + {c_4}^2\,\ln\frac{\mathrm{P}4_{iMAX}}{a_4} = 0$$

wobei

Der Parameter $a_4$ ist eine Zahl größer als 0 und kleiner oder gleich 1 und stellt die Höhe einer Gaußkurve dar; der Parameter $b_4$ ist ein Temperaturwert, bei dem eine Gaußsche Kurve zentriert ist; der Parameter $c_4$ ist der Wert des Abstands zwischen einer Symmetrieachse einer Gaußkurve und einem Wendepunkt der Gaußkurve; und x ist der Wert, den P4 annehmen kann; Berechnen der zweiten reellen Zahl R2 gleich dem Mittelwert der mindestens zwei reellen Zahlen $P4_1$, $P4_2$.

5. Steuersystem gemäß dem vorherigen Anspruch, wobei die Ausgangsschicht des neuronalen Netzes umfasst:

- eine jeweilige dritte Gruppe von Ausgangsknoten ($N_{OUT1F31}$,$N_{OUT2F31}$...$N_{OUTNF31}$;$N_{OUT1F32}$,$N_{OUT2F32}$...$N_{OUTNF32}$;... $N_{OUT1F3N}$,$N_{OUT2F3N}$...$N_{OUTNF3N}$) für jede Fuzzy-Menge $F3_1$,$F3_2$...$F3_N$ der dritten Gruppe von Fuzzy-Mengen F3,
- eine jeweilige vierte Gruppe von Ausgangsknoten ($N_{OUT1F41}$,$N_{OUT2F41}$...$N_{OUTNF41}$;$N_{OUT1F42}$,$N_{OUT2F42}$...$N_{OUTNF42}$;...$N_{OUT1F4\ N}$,$N_{OUT2F4N}$...$N_{OUTNF4N}$) für jede Fuzzy-Menge $F4_1$,$F4_2$...$F4_N$ der vierten Gruppe von Fuzzy-Mengen F4,

wobei

Das neuronale Netz ist so konfiguriert, dass es eine Ausgabe liefert:

die aktualisierten Parameter $a_3$, $b_3$, $c_3$ der dritten Triade von Parametern für die vorbestimmte dritte Gleichung, von denen jeder an einem jeweiligen Ausgangsknoten jeder dritten Gruppe von Ausgangsknoten liegt, die aktualisierten Parameter $a_4$, $b_4$, $c_4$ der vierten Triade von Parametern für die vorbestimmte vierte Gleichung, von denen jeder an einem Ausgangsknoten jeder vierten Gruppe von Ausgangsknoten liegt, wobei

die Logiksteuereinheit (4) so konfiguriert ist, dass sie:

o Einsetzen der dritten Triade von aktualisierten Parametern $a_3$, $b_3$, $c_3$ in die vorbestimmte dritte Gleichung, um einen aktualisierten Fuzzy-Datensatz aufgrund der Änderung der Form der durch die vorbestimmte dritte Gleichung dargestellten Funktion zu erhalten, wobei der aktualisierte Fuzzy-Datensatz mit den dritten Fuzzy-Daten des dritten Fuzzy-Datensatzes $P3_i$ verbunden ist,

o Einfügen der vierten Triade von aktualisierten Parametern $a_4$, $b_4$, $c_4$ in die vorbestimmte vierte Gleichung, um einen aktualisierten weiteren Fuzzy-Datensatz aufgrund der Änderung der Form der durch die vorbestimmte vierte Gleichung dargestellten Funktion zu erhalten, wobei der aktualisierte weitere Fuzzy-Datensatz mit den vierten Fuzzy-Daten des vierten Fuzzy-Datensatzes $P4_i$ verbunden ist,

jeden aktualisierten Fuzzy-Datensatz und jeden weiteren aktualisierten Fuzzy-Datensatz zu defuzzifizieren.

6. Steuersystem gemäß dem vorherigen Anspruch, wobei jede dritte Gruppe von Ausgangsknoten ($N_{OUT1F31}$,$N_{OUT2F31}$...$N_{OUTNF31}$;$N_{OUT1F32}$,$N_{OUT2F32}$...$N_{OUTNF32}$;...

$N_{OUT1F3N}, N_{OUT2F3N}...N_{OUTNF3N})$ umfasst drei Ausgangsknoten $(N_{OUT1F31}, N_{OUT2F31}, N_{OUT3F31}; N_{OUT1F32}, N_{OUT2F32}, N_{OUT3F32}; ...N_{OUT1F3N}, N_{OUT2F3N}, N_{OUT3F3N})$ und das neuronale Netz so konfiguriert ist, dass es einen jeweiligen aktualisierten Parameter $a_3$, $b_3$, $c_3$ für die dritte Gleichung an jedem Ausgangsknoten der dritten Gruppe von Ausgangsknoten bereitzustellen, um so eine jeweilige dritte Triade von aktualisierten Parametern $a_3$, $b_3$, $c_3$ für jede dritte Gruppe von Ausgangsknoten zu erhalten, und die logische Steuereinheit (4) so konfiguriert ist, dass sie die aktualisierten Parameter $a_3$, $b_3$, $c_3$ in die vorbestimmte dritte Gleichung einfügt, um einen aktualisierten Fuzzy-Datensatz aufgrund der Änderung der Form der durch die vorbestimmte dritte Gleichung dargestellten Funktion zu erhalten, wobei der aktualisierte Fuzzy-Datensatz mit den dritten Fuzzy-Daten des dritten Fuzzy-Datensatzes $P3_i$ verbunden ist, wobei

jede vierte Gruppe von Ausgangsknoten $(N_{OUT1F41}, N_{OUT2F41}...N_{OUTNF41}; N_{OUT1F42}, N_{OUT2F42}...N_{OUTNF42}; ...N_{OUT1F4N}, N_{OUT2F4N} ...N_{OUTNF4N})$ umfasst jeweils drei Ausgangsknoten $(N_{OUT1F41}, N_{OUT2F41}, N_{OUT3F41}; N_{OUT1F42}, N_{OUT2F42}...N_{OUTNF42}; ...N_{OUT1F4N}, N_{OUT2F4N}...N_{OUTNF4N})$, in denen jeweils ein aktualisierter Parameter $a_4$, $b_4$, $c_4$ vorhanden ist, um eine jeweilige vierte Triade aktualisierter Parameter $a_4$, $b_4$, $c_4$ für jede vierte Gruppe von Ausgangsknoten zu erhalten, und die logische Steuereinheit (4) so konfiguriert ist, dass sie die aktualisierten Parameter $a_4$, $b_4$, $c_4$ in die vorbestimmte vierte Gleichung einfügt, um einen aktualisierten weiteren Fuzzy-Datensatz aufgrund der Änderung der Form der durch die vorbestimmte vierte Gleichung dargestellten Funktion zu erhalten, wobei der aktualisierte weitere Fuzzy-Datensatz mit den vierten Fuzzy-Daten des vierten Fuzzy-Datensatzes $P4_i$ verbunden ist.

7. Steuersystem gemäß einem der vorstehenden Ansprüche, wobei das neuronale Netzwerk ein Kohonen-Netzwerk ist und die Eingabeschicht $(N_{IN2})$ zum Empfangen des vom Benutzer ausgewählten Temperaturwerts $T_U$ und die Eingabeschicht $(N_{IN3})$ zum Empfangen des vom Benutzer ausgewählten Drehzahlwerts $V_U$ des Ventilators (F) zwischen dem Eingangsknoten $(N_{IN1})$ zum Empfangen eines Wertes der Innentemperatur $T_{INi}$ und dem Eingangsknoten $(N_{IN4})$ zum Empfangen eines Wertes der Temperaturänderung $\delta T_{Dj}$ angeordnet sind.

8. Regelsystem nach Anspruch 1, wobei die vorbestimmte erste Gleichung für die Fuzzifizierung jedes Wertes der Innentemperatur $T_{INi}$ eine beliebige Funktion ist, die einen Grad der Zugehörigkeit zu einem Fuzzy-Set der ersten Gruppe von Fuzzy-Sets identifiziert, und

die vorbestimmte zweite Gleichung für die Fuzzifizierung jedes Wertes der Temperaturänderung $\delta T_{Dj}$ eine beliebige Funktion ist, die einen Grad der Zugehörigkeit zu einer Fuzzy-Menge der zweiten Gruppe von Fuzzy-Mengen identifiziert.

9. Steuerungssystem nach einem der Ansprüche 1 bis 3, wobei die Defuzzifizierung mittels einer der folgenden Methoden durchgeführt wird: letzte der Maxima, Summenzentrum, Flächenzentrum, Trägheitszentrum, Schwerpunkt.

10. Regelsystem nach einem der vorhergehenden Ansprüche, wobei die erste Gruppe von Fuzzy-Mengen F1 mindestens drei Fuzzy-Mengen $F1_1, F1_2, F1_3$ umfasst, so dass jedem Wert der Innentemperatur $T_{INi}$ mindestens drei Zahlen zugeordnet sind, die den jeweiligen Grad der Zugehörigkeit zu einer Fuzzy-Menge der ersten Gruppe von Fuzzy-Mengen F1 angeben,

wobei

die zweite Gruppe von Fuzzy-Mengen F2 mindestens drei Fuzzy-Mengen $F2_1, F2_2, F2_3$ umfasst, so dass jedem Wert der Temperaturänderung $\delta T_{Dj}$ mindestens drei Zahlen zugeordnet sind, die den jeweiligen Grad der Zugehörigkeit zu einer Fuzzy-Menge der zweiten Gruppe von Fuzzy-Mengen F2 angeben.

11. Steuerungssystem nach einem der vorhergehenden Ansprüche, wobei die dritte Gruppe von Fuzzy-Mengen F3 mindestens vier Fuzzy-Mengen $F3_1$, $F3_2$, $F3_3$, $F3_4$ umfasst: eine erste Fuzzy-Menge $F3_1$, um einen ersten Öffnungszustand des Steuerventils (4) zu identifizieren, eine zweite Fuzzy-Menge $F3_2$, um einen zweiten Öffnungszustand des Steuerventils (V) zu identifizieren, der sich von dem ersten Öffnungszustand unterscheidet, einen dritten Fuzzy-Satz $F3_3$, um einen dritten Öffnungszustand des Steuerventils (V) zu identifizieren, der sich von dem ersten Öffnungszustand und dem zweiten Öffnungszustand unterscheidet, und einen vierten Fuzzy-Satz $F3_4$, um einen Schließzustand des Steuerventils (V) zu identifizieren.

12. Steuerungssystem nach einem der Ansprüche 1-11, wobei, wenn die Einstellmittel (A) zum Einstellen der Geschwindigkeit des Ventilators (F) einen Inverter umfassen, die vierte Gruppe von Fuzzy-Sets F4 mindestens vier Fuzzy-Sets $F4_1, F4_2, F4_3, F4_4$ umfasst: eine erste Fuzzy-Menge $F4_1$ zur Identifizierung einer ersten Geschwindigkeit des Ventilators (F), eine zweite Fuzzy-Menge $F4_2$ zur Identifizierung einer zweiten Geschwindigkeit des Ventilators (F), die sich von der ersten Geschwindigkeit unterscheidet, eine dritte Fuzzy-Menge $F4_3$, um eine dritte Geschwin-

digkeit des Ventilators (F) zu identifizieren, die sich von der ersten Geschwindigkeit und der zweiten Geschwindigkeit unterscheidet, und eine vierte Fuzzy-Menge $F4_4$, um eine vierte Geschwindigkeit des Ventilators (F) gleich Null zu identifizieren; wobei die erste reelle Zahl $R1$ vorzugsweise größer als 0 und kleiner oder gleich 10 ist, und die zweite reelle Zahl R2 vorzugsweise größer als 0 und kleiner als 10 ist.

13. Steuerungssystem nach einem der Ansprüche 1 bis 11, wobei, wenn das Einstellmittel (A) zum Einstellen der Geschwindigkeit des Ventilators (F) ein oder mehrere Relais umfasst, die vierte Gruppe von Fuzzy-Mengen F4 zwei jeweilige Fuzzy-Mengen $F4_1$, $F4_2$ für jedes Relais umfasst: eine erste unscharfe Menge $F4_1$, um eine erste Geschwindigkeit des Ventilators (F) gleich Null zu identifizieren, und eine zweite unscharfe Menge $F4_2$, um eine zweite Geschwindigkeit zu identifizieren, die sich von der ersten Geschwindigkeit unterscheidet; wobei die erste reelle Zahl $R1$ vorzugsweise größer als 0 und kleiner oder gleich 10 ist, und die zweite reelle Zahl R2 vorzugsweise größer als 0 und kleiner als 10 ist.

14. Klimaanlage (U) mit einem Steuerungssystem nach einem der vorhergehenden Ansprüche.

15. Verfahren zum Steuern mindestens einer Klimaanlage (U), die in einer Umgebung angeordnet ist und durch die der thermische Komfort der Umgebung gesteuert wird, durch das Steuersystem nach einem der Ansprüche 1 bis 14, wobei die Klimaanlage (U) von dem Typ ist, der einen Ventilator (F), eine Einstelleinrichtung (A) zum Einstellen der Geschwindigkeit des Ventilators (F) und ein Steuerventil (V) zum Steuern der Durchflussmenge eines Thermovektorfluids über die Zeit umfasst, wobei das Verfahren die folgenden Schritte umfasst:

   o Erfassen eines Wertes der Innentemperatur $T_{INi}$ für eine entsprechende vorbestimmte Zeitspanne $\Delta t_{REFi}$, sowie des Wertes der Temperatur $T_u$ und des Wertes der Geschwindigkeit $V_u$ von dem Benutzerschnittstellenmodul (2);
   ○ Berechnen eines oder mehrerer Werte der Temperaturvariation $\delta T_{Dj}$, mit j=1,...,M, wobei M eine positive ganze Zahl und j die Anzahl der vorbestimmten Zeitperioden ist, und wobei jeder Wert der Temperaturänderung $\delta T_{Dj}$ durch die Subtraktion zwischen dem Wert der Innentemperatur $T_{INi}$ in einer vorbestimmten Zeitperiode und dem Wert der Innentemperatur $T_{INi-1}$ in der vorhergehenden vorbestimmten Zeitperiode erhalten wird;
   o Speicherung:

      die Werte der Innentemperatur $T_{INi}$, bezogen auf mindestens zwei vorbestimmte Zeiträume $\Delta t_{REFi}$ und den einen oder die mehreren Werte der Temperaturänderung $\delta T_{Dj}$ sowie den Temperaturwert $T_U$ und den Geschwindigkeitswert $V_U$;
      eine erste Gruppe von Fuzzy-Mengen F1, die eine Vielzahl von Fuzzy-Mengen $F1_1, F1_2...F1_N$ umfasst, von denen jede einen jeweiligen Grad der Zugehörigkeit zu einem Wert der Innentemperatur $T_{INi}$ identifiziert;
      eine zweite Gruppe von Fuzzy-Mengen F2, die eine Vielzahl von Fuzzy-Mengen $F2_1, F2_2...F2_N$ umfasst, von denen jede einen jeweiligen Grad der Zugehörigkeit zu einem Wert der Temperaturänderung $\delta T_{Dj}$ identifiziert;
      eine dritte Gruppe von Fuzzy-Mengen F3, die eine Vielzahl von Fuzzy-Mengen $F3_1, F3_2...F3_N$ umfasst, von denen jede einen jeweiligen Grad der Zugehörigkeit zu einem Öffnungszustand des Steuerventils (V) identifiziert;
      eine vierte Gruppe von Fuzzy-Mengen F4, die eine Vielzahl von Fuzzy-Mengen $F4_1, F4_2...F4_N$ umfasst, von denen jede einen entsprechenden Grad der Zugehörigkeit eines Wertes der Geschwindigkeit des Ventilators (F) identifiziert;
      eine Vielzahl vorbestimmter Folgerungsregeln, die auf der Grundlage des Zugehörigkeitsgrades jedes Wertes der Innentemperatur $T_{INi}$ und des Zugehörigkeitsgrades jedes Wertes der Temperaturschwankung $\delta T_{Dj}$ den Zugehörigkeitsgrad des Öffnungszustandes des Steuerventils (V) und den Zugehörigkeitsgrad der Drehzahl des Ventilators (F) bestimmen,

   o die Durchführung einer entsprechenden Fuzzifizierung bezeichnet:

      jeden Wert der Innentemperatur $T_{INi}$, um einen jeweiligen ersten Fuzzy-Datensatz $P1_j$ zu erhalten, der eine jeweilige Mehrzahl von ersten Fuzzy-Daten $P1_{i1}, P1_{i2}...P1_{iN}$, wobei jedes erste Fuzzy-Datum einen jeweiligen Grad der Zugehörigkeit des Wertes der Innentemperatur $T_{INi}$ identifiziert und mittels einer vorbestimmten ersten Gleichung erhalten wird, die durch eine Vielzahl von Parametern definiert ist;
      jeden Wert der Temperaturschwankung $\delta T_{Dj}$; um einen jeweiligen zweiten Fuzzy-Datensatz $P2_j$ zu erhalten, der eine jeweilige Mehrzahl von zweiten Fuzzy-Daten $P2_{i1}, P2_{i2}...P2_{iN}$, wobei jeder zweite Fuzzy-Datensatz einen jeweiligen Grad der Zugehörigkeit des Wertes der Temperaturvariation $\delta T_{Dj}$ identifiziert und mittels einer vorbestimmten zweiten Gleichung erhalten wird, die durch eine Vielzahl weiterer Parameter definiert ist,

o Anwenden der vorbestimmten Schlußfolgerungsregeln auf jedes Paar von Fuzzy-Daten, die durch erste Fuzzy-Daten $P1_{i1}, P1_{i2}...P1_{iN}$ und zweite Fuzzy-Daten $P2_{i1}, P2_{i2}...P2_{iN}$ gebildet werden, um einen entsprechenden dritten Fuzzy-Datensatz $P3_i$ zu erhalten; bestehend aus einer Vielzahl von dritten Fuzzy-Daten $P3_{i1}, P3_{i2}...P3_{iN}$, wobei jedes dritte Fuzzy-Datum einen jeweiligen Grad der Zugehörigkeit des Öffnungszustands des Steuerventils (V) zu einem jeweiligen Fuzzy-Datensatz identifiziert, der mit den dritten Fuzzy-Daten des dritten Fuzzy-Datensatzes $P3_i$ verbunden ist, und einem jeweiligen vierten Fuzzy-Datensatz $P4_i$, der eine Vielzahl von vierten Fuzzy-Daten $P4_{i1}, P4_{i2}...P4_{iN}$, wobei jedes vierte Fuzzy-Datum einen jeweiligen Grad der Zugehörigkeit des Wertes der Geschwindigkeit des Ventilators (F) in bezug auf einen jeweiligen weiteren Fuzzy-Datensatz identifiziert, der mit den vierten Fuzzy-Daten des vierten Fuzzy-Datensatzes $P4_i$ verbunden ist,
∘ die Durchführung einer entsprechenden Defuzzifizierung bezeichnet:
den Fuzzy-Datensatz, der den dritten Fuzzy-Daten des dritten Fuzzy-Datensatzes $P3_i$ zugeordnet ist, um eine erste reelle Zahl $R$1 zu erhalten, die angibt, ob das Steuerventil (V) zu öffnen ist und wie weit es zu öffnen ist oder ob es geschlossen ist, den weiteren Fuzzy-Datensatz, der mit den vierten Fuzzy-Daten des vierten Fuzzy-Datensatzes $P4_i$ verbunden ist, um eine zweite reelle Zahl R2 zu erhalten, die die Geschwindigkeit des Ventilators (F) angibt,
∘ Empfangen eines Wertes der Innentemperatur $T_{INi}$, eines Wertes der Temperaturänderung $\delta T_{Dj}$, eines Temperaturwertes $T_U$ und eines Geschwindigkeitswertes $V_U$ an einem jeweiligen Eingangsknoten ($N_{IN1}$, $N_{IN2}$, $N_{IN3}$, $N_{TN4}$) des neuronalen Netzes;
o Bereitstellen der aktualisierten Parameter für die vorbestimmte erste Gleichung an einem jeweiligen Ausgangsknoten jeder ersten Gruppe von Ausgangsknoten des neuronalen Netzes und der weiteren aktualisierten Parameter für die vorbestimmte zweite Gleichung an einem jeweiligen Ausgangsknoten jeder zweiten Gruppe von Ausgangsknoten des neuronalen Netzes als Ausgabe;
o Einsetzen der aktualisierten Parameter in die vorbestimmte erste Gleichung, um erste aktualisierte Fuzzy-Daten $P1_i$ zu erhalten, und der weiteren aktualisierten Parameter in die vorbestimmte zweite Gleichung, um zweite aktualisierte Fuzzy-Daten $P2_i$ zu erhalten,
o Anwenden der vorbestimmten Schlußfolgerungsregeln auf jedes Paar von Fuzzy-Daten, das aus einem ersten aktualisierten Fuzzy-Datenwert $P1_i$ und einem zweiten aktualisierten Fuzzy-Datenwert $P2_i$ besteht, gebildet werden, um durch Defuzzifizierung einen dritten aktualisierten Fuzzy-Datensatz $P3_i$, der dem Steuerventil (V) zugeordnet ist, und einen vierten aktualisierten Fuzzy-Datensatz $P4_i$, der der Drehzahl des Ventilators (F) zugeordnet ist, sowie eine aktualisierte erste reelle Zahl $R$1 oder eine zweite reelle Zahl R2 zu erhalten;
∘ Erzeugen eines Signals zur Steuerung des Steuerventils (V), das eine Information über die erste reelle Zahl $R$1 oder die aktualisierte erste reelle Zahl $R$1 zum Öffnen/Schließen des Steuerventils (V) enthält, und eines weiteren Signals zur Steuerung der Einstellmittel (A), das eine Information über die zweite reelle Zahl R2 oder die aktualisierte zweite reelle Zahl R2 für die Geschwindigkeit des Ventilators (F) enthält.

**Revendications**

1. Système de contrôle adapté

   pour commander au moins une unité de conditionnement d'air (U)
   positionnée dans un environnement et par laquelle le confort thermique de cet environnement est contrôlé, ladite unité de climatisation (U) étant du type comprenant un ventilateur (F), des moyens de réglage (A) pour ajuster la vitesse dudit ventilateur (F), une vanne de régulation (V) pour contrôler le débit d'un fluide thermovecteur au cours du temps, ledit système de régulation comprenant:

   - des moyens de détection de la température (1), à installer dans ledit environnement, configurés pour détecter une valeur respective de la température interne $T_{INi}$ dudit environnement pour une pluralité de périodes de temps prédéterminées $\Delta t_{REFi}$, avec i=1,...,N, où N est un nombre entier positif,
   - un module d'interface utilisateur (2) configuré pour permettre à un utilisateur de sélectionner une valeur de température $T_U$ et une valeur de vitesse $V_U$ du ventilateur (V),
   - des moyens de stockage (3),
   - une unité de commande logique (4) configurée pour:

       o acquérir une valeur de température interne $T_{INi}$ à partir desdits moyens de détection de la température (1) pour une période de temps prédéterminée respective $\Delta t_{REFi}$ ainsi que ladite valeur de température $T_U$ et ladite valeur de vitesse $V_U$ à partir dudit module d'interface utilisateur (2),

○ calculer une ou plusieurs valeurs de variations de température $\delta T_{Dj}$, avec j=1,...,M, où M est un nombre entier positif et j est le nombre de périodes de temps prédéterminées, et où chaque valeur de variation de température $\delta T_{Dj}$ est obtenue par la soustraction entre la valeur de la température interne $T_{INi}$ dans une période de temps prédéterminée et la valeur de la température interne $T_{INi-1}$ dans la période de temps prédéterminée précédente;

○ stocker dans lesdits moyens de stockage (3):

○ les valeurs de température interne $T_{iNi}$ référencées à au moins deux périodes de temps prédéterminées $\Delta t_{REFi}$ et lesdites une ou plusieurs valeurs de variation de température $\delta T_{Dj}$, ainsi que ladite valeur de température $T_U$ et ladite valeur de vitesse $V_U$,

un premier groupe d'ensembles flous F1 comprenant une pluralité d'ensembles flous $F1_1, F1_2...F1_N$, dont chacun identifie un degré respectif d'appartenance à une valeur de température interne $T_{INi}$,

un deuxième groupe d'ensembles flous F2 comprenant une pluralité d'ensembles flous $F2_1, F2_2...F2_N$, dont chacun identifie un degré d'appartenance respectif d'une valeur de variation de température $\delta T_{Dj}$,

un troisième groupe d'ensembles flous F3 comprenant une pluralité d'ensembles flous $F3_1, F3_2...F3_N$, chacun identifiant un degré respectif d'appartenance à un état d'ouverture de la vanne de commande (V),

un quatrième groupe d'ensembles flous F4 comprenant une pluralité d'ensembles flous $F4_1, F4_2...F4_N$, chacun identifiant un degré d'appartenance respectif d'une valeur de la vitesse du ventilateur (F),

une pluralité de règles déductives prédéterminées qui établissent, sur la base du degré d'appartenance de chaque valeur de température interne $T_{INi}$ et du degré d'appartenance de chaque valeur de variation de température $\delta T_{Dj}$, le degré d'appartenance de l'état d'ouverture de la vanne de régulation (V) et le degré d'appartenance de la vitesse de rotation du ventilateur (F),

○ effectuer une fuzzification respective visée:

chaque valeur de température interne $T_{INi}$ pour obtenir un premier ensemble de données floues $P1_i$, comprenant une pluralité respective de premières données floues $P1_{i1}, P1_{i2}.... P1_{iN}$, où chaque première donnée floue identifie un degré respectif d'appartenance de ladite valeur de température interne $T_{INi}$, et est obtenue au moyen d'une première équation prédéterminée définie par une pluralité de paramètres,

chaque valeur de variation de température $\delta T_{Dj}$ pour obtenir un deuxième ensemble de données floues $P2_i$, comprenant une pluralité respective de deuxièmes données floues $P2_{i1}, P2_{i2}...P2_{iN}$, où chaque deuxième donnée floue identifie un degré respectif d'appartenance à ladite valeur de variation de température $\delta T_{Dj}$, où chaque deuxième donnée floue identifie un degré respectif d'appartenance de ladite valeur de variation de température

○ appliquer lesdites règles déductives prédéterminées à chaque paire de données floues formée par une première donnée floue $P1_{i1}, P1_{i2}...P1_{iN}$ et une deuxième donnée floue $P2_{i1}, P2_{i2}....P2_{iN}$ pour obtenir un troisième ensemble de données floues $P3_i$, comprenant une pluralité de troisièmes données floues $P3_{i1}, P3_{i2}....P3_{iN}$, dans lequel chaque troisième donnée floue identifie un degré respectif d'appartenance dudit état d'ouverture de la vanne de commande (V) à un ensemble respectif de données floues associé à ladite troisième donnée floue dudit troisième ensemble de données floues $P3_i$, et un quatrième ensemble respectif de données floues $P4_i$ comprenant une pluralité de quatrièmes données floues $P4_{i1}, P4_{i2}....P4_{iN}$, dans lequel chaque quatrième donnée floue identifie un degré respectif d'appartenance de ladite valeur de la vitesse du ventilateur (F) par rapport à un autre ensemble respectif de données floues associé à ladite quatrième donnée floue dudit quatrième ensemble de données floues $P4_i$,

○ effectuer une défuzzification respective visée: Ledit ensemble de données floues associé à ladite troisième donnée floue dudit troisième ensemble de données floues $P3_i$ pour obtenir un premier nombre réel $R1$ indiquant si la vanne de commande (V) doit être ouverte et dans quelle mesure ou si elle doit être fermée, ledit autre ensemble de données floues associé à ladite quatrième donnée floue dudit quatrième ensemble de données floues $P4_i$; pour obtenir un deuxième nombre réel $R2$ indiquant la vitesse du ventilateur (F),

o réaliser un réseau neuronal comprenant:

une couche d'entrée comprenant plusieurs nœuds d'entrée ($N_{IN1}$, $N_{IN2}$, $N_{IN3}$, $N_{IN4}$), et une couche de sortie comprenant un premier groupe respectif de nœuds de sortie ($N_{OUT1F11}$,$N_{OUT2F11}$...$N_{OUTNF11}$; $N_{OUT1F12}$,$N_{OUT2F12}$....$N_{OUTNF12}$;...$N_{OUT1F1N}$, $N_{OUT2F1N}$...$N_{OUTNF1N}$) pour chaque ensemble flou $F1_1$,$F1_2$...$F1_N$ du premier groupe d'ensembles flous F1, ainsi qu'un deuxième groupe respectif de nœuds de sortie ($N_{OUT1F21}$,$N_{OUT2F21}$...$N_{OUTNF21}$; $N_{OUT1F22}$,$N_{OUT2F22}$...$N_{OUTNF22}$;... $N_{OUT1F2N}$, $N_{OUT2F2N}$...$N_{OUTNF2N}$) pour chaque ensemble flou $F2_1$,$F2_2$...$F2_N$ du second groupe d'ensembles flous F2, dans lequel ledit réseau neuronal est configuré pour:

- recevoir au fil du temps ladite valeur de température interne $T_{INi}$, ladite valeur de variation de température $\delta T_{Dj}$, ladite valeur de température $T_U$ et ladite valeur de vitesse $V_U$ au niveau d'une couche d'entrée respective ($N_{IN1}$, $N_{IN2}$, $N_{IN3}$, $N_{IN4}$), et ...
- fournir en sortie les paramètres mis à jour pour ladite première équation prédéterminée à un nœud de sortie respectif de chaque premier groupe de nœuds de sortie, et les autres paramètres mis à jour pour ladite deuxième équation prédéterminée à un nœud de sortie respectif de chaque deuxième groupe de nœuds de sortie, o insérer lesdits paramètres mis à jour dans ladite première équation prédéterminée pour obtenir une première donnée floue mise à jour $P1_i$ et lesdits autres paramètres mis à jour dans ladite deuxième équation prédéterminée pour obtenir une deuxième donnée floue mise à jour $P2_i$,

○ appliquer lesdites règles inférentielles prédéterminées à chaque paire de données floues formée par une première donnée floue mise à jour $P1_i$ et une deuxième donnée floue mise à jour $P2_i$, afin d'obtenir une troisième donnée floue actualisée $P3_i$ associée à la vanne de commande (V) et une quatrième donnée floue actualisée $P4_i$ associée à la vitesse du ventilateur (F), ainsi que pour obtenir un premier nombre réel actualisé $R1$ et un deuxième nombre réel actualisé R2, par défuzzification;

o générer un signal pour commander ladite vanne de commande (V) contenant une information concernant ledit premier nombre réel $R1$ ou ledit premier nombre réel mis à jour $R1$ pour l'ouverture/la fermeture de la vanne de commande (V) et un autre signal pour commander lesdits moyens de réglage (A) contenant une information concernant ledit deuxième nombre réel $R2$ ou ledit deuxième nombre réel mis à jour $R2$ pour la vitesse du ventilateur (F).

2. Système de contrôle selon la revendication précédente,
dans lequel
en ce qui concerne la fuzzification relative à chaque valeur de température interne $T_{INi}$, ladite première équation prédéterminée est définie par une première triade de paramètres $a_1$, $b_1$, $c_1$ et représente une courbe gaussienne:

$$P1_i = a_1 \cdot e^{-\frac{(x_i - b_1)^2}{c_1^2}}$$

où

le paramètre $a_1$, est un nombre prédéterminé supérieur à 0 et inférieur ou égal à 1 et représente la hauteur de la courbe gaussienne;
le paramètre $b_1$ est une valeur prédéterminée de la température dans laquelle la courbe gaussienne est centrée;
le paramètre $c_1$ est une valeur prédéterminée indiquant la distance entre un axe de symétrie de la courbe gaussienne et un point d'inflexion de la courbe gaussienne; et
$x_i$ est une valeur respective de la température interne $T_{INi}$,
dans lequel
en ce qui concerne la fuzzification relative à chaque valeur de variation de température $\delta T_{Dj}$, ladite deuxième équation prédéterminée est définie par une deuxième triade de paramètres $a_2$, $b_2$, $c_2$ et représente une courbe gaussienne:

$$P2_i = a_2 \cdot e^{-\frac{(x_j - b_2)^2}{c_2{}^2}}$$

où

le paramètre $a_2$ est un nombre prédéterminé supérieur à 0 et inférieur ou égal à 1 et représente la hauteur de la courbe gaussienne;

le paramètre $b_2$ est une valeur prédéterminée de la température dans laquelle la courbe gaussienne est centrée;

le paramètre $c_2$ est une valeur prédéterminée indiquant la distance entre un axe de symétrie de la courbe gaussienne et un point d'inflexion de la courbe gaussienne; et

$x_j$ est une valeur respective de la variation de température $\delta T_{Dj}$.

3. Système de contrôle selon la revendication 2, dans lequel

chaque premier groupe de nœuds de sortie ($N_{OUT1F11}$, $N_{OUT2F11}...N_{OUTNF11}$;$N_{OUT1F12}$,$N_{OUT2F12}...N_{OUTNF12}$;...$N_{OUT1F1N}$,$N_{OUT2F1N}$ ....$N_{OUTNF1N}$) comprenant trois nœuds de sortie respectifs ($N_{OUT1F11}$,$N_{OUT2F11}$,$N_{OUT3F11}$;$N_{OUT1F12}$,$N_{OUT2F12}$,$N_{OUT3F12}$;. ..$N_{OUT1F1N}$,$N_{OUT2F1N}$,$N_{OUT3F1N}$) et ledit réseau neuronal est configuré pour fournir à chaque nœud de sortie dudit premier groupe de nœuds de sortie un paramètre respectif mis à jour $a_1$, $b_1$, $c_1$, de manière à obtenir une première triade respective de paramètres mis à jour $a_1$, $b_1$, $c_1$, et

Ladite unité de commande logique (4) est configurée pour insérer ladite première triade de paramètres actualisés $a_1$, $b_1$, $c_1$ dans ladite première équation prédéterminée afin d'obtenir une première donnée floue actualisée P1$_i$; dans lequel

chaque deuxième groupe de nœuds de sortie ($N_{OUT1F21}$,$N_{OUT2F21}...N_{OUTNF21}$; $N_{OUT1F22}$, $N_{OUT2F22}...N_{OUTNF22}$;.... $N_{OUT1F2N}$, $N_{OUT2F2N}$....$N_{OUTNF2N}$) comprenant trois nœuds de sortie respectifs ($N_{OUT1F21}$,$N_{OUT2F21}$,$N_{OUT3F21}$;$N_{OUT1F21}$,$N_{OUT2F21}$,$N_{OUT3F21}$;....$N_{OUT1F2N}$, $N_{OUT2F2N}$, $N_{OUT3F2N}$) et ledit réseau neuronal est configuré pour fournir à chaque nœud de sortie dudit deuxième groupe de nœuds de sortie un paramètre respectif mis à jour $a_2$, $b_2$, $c_2$, de manière à obtenir une deuxième triade de paramètres actualisés $a_2$, $b_2$, $c_2$, et

Ladite unité de commande logique (4) est configurée pour insérer ladite deuxième triade de paramètres actualisés $a_2$, $b_2$, $c_2$ dans ladite deuxième équation prédéterminée afin d'obtenir une deuxième donnée floue actualisée P2$_i$.

4. Système de contrôle selon la revendication 2 ou 3, dans lequel

la défuzzification relative audit ensemble de données floues associé à ladite troisième donnée floue dudit troisième ensemble de données floues P3$_i$ est effectuée par une méthode appelée moyenne des maxima et l'unité de commande logique (4) est configurée pour:

o sélectionner une valeur maximale P3$_{iMAX}$ par rapport à chaque troisième donnée floue P3$_{i1}$, P3$_{i2}$.P3$_{iN}$, ladite valeur maximale étant associée à au moins un ensemble flou F3$_1$,F3$_2$...F3$_N$ du troisième groupe d'ensembles flous F3,

∘ calculer au moins deux nombres réels P3$_1$, P3$_2$ en appliquant une troisième équation prédéterminée définie par une troisième triade de paramètres $a_3$, $b_3$, $c_3$:

$$x^2 - 2\,b_3\,x + b_3{}^2 + c_3{}^2 \ln \frac{P3_{iMAX}}{a_3} = 0$$

dans lequel

le paramètre $a_3$ est un nombre supérieur à 0 et inférieur ou égal à 1 et représente la hauteur d'une courbe gaussienne;

le paramètre $b_3$ est une valeur de température dans laquelle une courbe gaussienne est centrée;

le paramètre $c_3$ est la valeur de la distance entre un axe de symétrie d'une courbe gaussienne et un point d'inflexion de ladite courbe gaussienne; et x est une valeur que P3 peut prendre;

o calculer ledit premier nombre réel $R1$ égal à la valeur moyenne desdits au moins deux nombres réels $P3_1$, $P3_2$; et

dans lequel

la défuzzification relative à ces autres données floues associées à ces quatrièmes données floues de ce quatrième ensemble de données floues $P4_i$ est effectuée par une méthode appelée moyenne des maxima et l'unité de commande logique (4) est configurée pour:

o sélectionner une valeur maximale $P4_{iMAX}$ par rapport à chaque quatrième donnée floue $P4_{i1}$,$P4_{i2}$.$P4_{iN}$, ladite valeur maximale étant associée à au moins un ensemble flou $F4_1$,$F4_2$...$F4_N$ du quatrième groupe d'ensembles flous F4,

∘ calculer au moins deux nombres réels $P4_1$, $P4_2$ en appliquant la quatrième équation prédéterminée suivante définie par une quatrième triade de paramètres $a_4$, $b_4$, $c_4$:

$$x^2 - 2\,b_4\,x + b_4{}^2 + c_4{}^2\,\ln\frac{\mathrm{P4}_{iMAX}}{a_4} = 0$$

où

le paramètre $a_4$ est un nombre supérieur à 0 et inférieur ou égal à 1 et représente la hauteur d'une courbe gaussienne;
le paramètre $b_4$ est une valeur de température dans laquelle une courbe gaussienne est centrée;
le paramètre $c_4$ est la valeur de la distance entre un axe de symétrie d'une courbe gaussienne et un point d'inflexion de ladite courbe gaussienne; et x est la valeur que peut prendre P4;
calculer ledit deuxième nombre réel $R2$ égal à la valeur moyenne desdits au moins deux nombres réels $P4_1$, $P4_2$.

5. Système de contrôle selon la revendication précédente, dans lequel

la couche de sortie dudit réseau neuronal comprend:

- un troisième groupe respectif de noeuds de sortie ($N_{OUT1F31}$, $N_{OUT2F31}$...$N_{OUTNF31}$;$N_{OUT1F32}$,$N_{OUT2F32}$...$N_{OUTNF32}$;.... $N_{OUT1F3N}$,$N_{OUT2F3N}$...$N_{OUTNF3N}$) pour chaque ensemble flou $F3_1$,$F3_2$...$F3_N$ du troisième groupe d'ensembles flous F3,
- un quatrième groupe respectif de nœuds de sortie ($N_{OUT1F41}$,$N_{OUT2F41}$...$N_{OUTNF41}$;$N_{OUT1F42}$,$N_{OUT2F42}$...$N_{OUTNF42}$;....$N_{OUT1\ F4N}$,$N_{OUT2F4N}$...$N_{OUTNF4N}$) pour chaque ensemble flou $F4_1$,$F4_2$...$F4_N$ du quatrième groupe d'ensembles flous F4,

dans lequel
Ledit réseau neuronal est configuré pour fournir une sortie:

les paramètres mis à jour $a_3$, $b_3$, $c_3$ de ladite troisième triade de paramètres pour ladite troisième équation prédéterminée, chacun se trouvant à un nœud de sortie respectif de chaque troisième groupe de nœuds de sortie,
les paramètres mis à jour $a_4$, $b_4$, $c_4$ de ladite quatrième triade de paramètres pour ladite quatrième équation prédéterminée, chacun se trouvant à un nœud de sortie de chaque quatrième groupe de nœuds de sortie,
dans lequel
Ladite unité de commande logique (4) est configurée pour:

o insérer ladite troisième triade de paramètres mis à jour $a_3$, $b_3$, $c_3$ dans ladite troisième équation prédéterminée pour obtenir un ensemble de données floues mis à jour, en raison du changement de forme de la fonction représentée par ladite troisième équation prédéterminée, dans lequel ledit ensemble de données floues mis à jour est associé à ladite troisième donnée floue dudit troisième ensemble de données floues $P3_i$,
∘ insérer ladite quatrième triade de paramètres mis à jour $a_4$, $b_4$, $c_4$ dans ladite quatrième équation prédéterminée pour obtenir un autre ensemble de données floues mis à jour, en raison du changement de forme de la fonction représentée par ladite quatrième équation prédéterminée, ledit autre ensemble de données floues mis à jour étant associé à ladite quatrième donnée floue dudit quatrième ensemble de données floues P4$_i$,

défuzzifier chaque ensemble de données floues mis à jour et chaque autre ensemble de données floues mis à jour.

6. Système de contrôle selon la revendication précédente, dans lequel

chaque troisième groupe de nœuds de sortie ($N_{OUT1F31}$,$N_{OUT2F31}$...$N_{OUTNF31}$;$N_{OUT1F32}$,$N_{OUT2F32}$...$N_{OUTNF32}$;... $N_{OUT1F3N}$,$N_{OUT2F3N}$....$N_{OUTNF3N}$) comprend trois nœuds de sortie ($N_{OUT1F31}$,$N_{OUT2F31}$,$N_{OUT3F31}$;$N_{OUT1F32}$,$N_{OUT2F32}$,$N_{OUT3F32}$;...$N_{OUT1F3N}$,$N_{OUT2F3N}$,$N_{OUT3F3N}$) et ledit réseau neuronal est configuré pour fournir un paramètre respectif mis à jour $a_3$, $b_3$, $c_3$ pour ladite troisième équation à chaque nœud de sortie dudit troisième groupe de nœuds de sortie, de manière à obtenir une troisième triade respective de paramètres mis à jour $a_3$, $b_3$, $c_3$ pour chaque troisième groupe de nœuds de sortie, et
Ladite unité de commande logique (4) est configurée pour insérer lesdits paramètres mis à jour $a_3$, $b_3$, $c_3$ dans ladite troisième équation prédéterminée afin d'obtenir un ensemble de données floues mis à jour, en raison du changement de forme de la fonction représentée par ladite troisième équation prédéterminée, dans lequel ledit ensemble de données floues mis à jour est associé à ladite troisième donnée floue dudit troisième ensemble de données floues P3$_i$, dans lequel
chaque quatrième groupe de nœuds de sortie ($N_{OUT1F41}$, $N_{OUT2F41}$...$N_{OUTNF41}$;$N_{OUT1F42}$,$N_{OUT2F42}$...$N_{OUTNF42}$;$N_{OUT1F4N}$,$N_{OUT2F4\ N}$...$N_{OUTNF4N}$) comprend trois nœuds de sortie respectifs ($N_{OUT1F41}$,$N_{OUT2F41}$,$N_{OUT3F41}$;$N_{OUT1F42}$,$N_{OUT2F42}$....$N_{OUTNF\ 42}$;...$N_{OUT1F4N}$,$N_{OUT2F4N}$....$N_{OUTNF4N}$), dans lequel un paramètre actualisé respectif $a_4$, $b_4$, $c_4$ est présent, de manière à obtenir une quatrième triade respective de paramètres actualisés $a_4$, $b_4$, $c_4$ pour chaque quatrième groupe de nœuds de sortie, et
Ladite unité de commande logique (4) est configurée pour insérer lesdits paramètres mis à jour $a_4$, $b_4$, $c_4$ dans ladite quatrième équation prédéterminée afin d'obtenir un autre ensemble de données floues mis à jour, en raison du changement de forme de la fonction représentée par ladite quatrième équation prédéterminée, dans lequel ledit autre ensemble de données floues mis à jour est associé à ladite quatrième donnée floue dudit quatrième ensemble de données floues P4$_i$.

7. Système de commande selon l'une quelconque des revendications précédentes, dans lequel ledit réseau neuronal est un réseau de Kohonen et ladite couche d'entrée ($N_{IN2}$) pour recevoir ladite valeur de température $T_U$ sélectionnée par l'utilisateur et ladite couche d'entrée. La couche d'entrée ($N_{IN3}$) pour recevoir ladite valeur de vitesse $V_U$ du ventilateur (F) sélectionnée par l'utilisateur est disposée entre ledit nœud d'entrée ($N_{IN1}$) pour recevoir une valeur de température interne $T_{INi}$ et ledit nœud d'entrée ($N_{IN4}$) pour recevoir une valeur de variation de température $\delta T_{Dj}$.

8. Système de commande selon la revendication 1, dans lequel ladite première équation prédéterminée pour la fuzzification de chaque valeur de température interne $T_{INi}$ est une fonction quelconque identifiant un degré d'appartenance à un ensemble flou du premier groupe d'ensembles flous, et
Ladite deuxième équation prédéterminée pour la fuzzification de chaque valeur de variation de température $\delta T_{Dj}$ est une fonction quelconque identifiant un degré d'appartenance à un ensemble flou du deuxième groupe d'ensembles flous.

9. Système de contrôle selon l'une des revendications 1 à 3, dans lequel la défuzzification est effectuée au moyen de l'une des méthodes suivantes: dernier des maxima, centre des sommes, centre de la surface, centre d'inertie, centre de gravité.

10. Système de commande selon l'une quelconque des revendications précédentes, dans lequel ledit premier groupe d'ensembles flous F1 comprend au moins trois ensembles flous F1$_1$, F1$_2$, F1$_3$, de sorte qu'au moins trois nombres identifient un degré respectif d'appartenance à un ensemble flou dudit premier groupe d'ensembles flous F1 sont associés à chaque valeur de température interne $T_{INi}$,
dans lequel
Ledit deuxième groupe d'ensembles flous F2 comprend au moins trois ensembles flous F2$_1$, F2$_2$, F2$_3$, de sorte qu'au moins trois nombres identifient un degré respectif d'appartenance à un ensemble flou dudit deuxième groupe d'ensembles flous F2 sont associés à chaque valeur de variation de température $\delta T_{Dj}$.

**11.** Système de commande selon l'une quelconque des revendications précédentes, dans lequel ledit troisième groupe d'ensembles flous F3 comprend au moins quatre ensembles flous $F3_1$, $F3_2$, $F3_3$,$F3_4$: un premier ensemble flou $F3_1$ pour identifier un premier état d'ouverture de la vanne de commande (4), un deuxième ensemble flou $F3_2$ pour identifier un deuxième état d'ouverture de la vanne de commande (V), différent dudit premier état d'ouverture, un troisième ensemble flou $F3_3$ pour identifier un troisième état d'ouverture de la vanne de commande (V), différent dudit premier état d'ouverture et dudit deuxième état d'ouverture, et un quatrième ensemble flou $F3_4$ pour identifier un état de fermeture de la vanne de commande (V).

**12.** Système de commande selon l'une quelconque des revendications 1 à 11, dans lequel, lorsque lesdits moyens de réglage (A) pour régler la vitesse du ventilateur (F) comprennent un onduleur, ledit quatrième groupe d'ensembles flous F4 comprend au moins quatre ensembles flous $F4_1$, $F4_2$, $F4_3$, $F4_4$: un premier ensemble flou $F4_1$ pour identifier une première vitesse du ventilateur (F), un deuxième ensemble flou $F4_2$ pour identifier une deuxième vitesse du ventilateur (F), différente de ladite première vitesse, un troisième ensemble flou $F4_3$ pour identifier une troisième vitesse du ventilateur (F), différente de ladite première vitesse et de ladite deuxième vitesse, et un quatrième ensemble flou $F4_4$ pour identifier une quatrième vitesse du ventilateur (F) égale à zéro; ledit premier nombre réel $R1$ étant de préférence supérieur à 0 et inférieur ou égal à 10, et ledit deuxième nombre réel $R2$ étant de préférence supérieur à 0 et inférieur à 10.

**13.** Système de commande selon l'une quelconque des revendications 1 à 11, dans lequel, lorsque ledit moyen de réglage (A) pour régler la vitesse du ventilateur (F) comprend un ou plusieurs relais, ledit quatrième groupe d'ensembles flous F4 comprend deux ensembles flous respectifs $F4_1$,$F4_2$ pour chaque relais: un premier ensemble flou $F4_1$ pour identifier une première vitesse du ventilateur (F) égale à zéro et un deuxième ensemble flou $F4_2$ pour identifier une deuxième vitesse, différente de ladite première vitesse; ledit premier nombre réel $R1$ étant de préférence supérieur à 0 et inférieur ou égal à 10, et ledit deuxième nombre réel R2 étant de préférence supérieur à 0 et inférieur **à** 10.

**14.** Unité de climatisation (U) comprenant un système de contrôle selon l'une quelconque des revendications précédentes.

**15.** Procédé de commande, par le système de commande selon l'une quelconque des revendications 1 à 14, d'au moins une unité de climatisation (U) positionnée dans un environnement et par laquelle est contrôlé le confort thermique dudit environnement, ladite unité de climatisation (U) étant du type comprenant un ventilateur (F), des moyens de réglage (A) pour régler la vitesse dudit ventilateur (F), une vanne de régulation (V) pour contrôler le débit d'un fluide thermovecteur au cours du temps, ledit procédé comprenant les étapes suivantes:

o acquérir une valeur de température interne $T_{INi}$ pour une période de temps prédéterminée respective $\Delta t_{REFi}$, ainsi que ladite valeur de température $T_U$ et ladite valeur de vitesse $V_U$ à partir dudit module d'interface utilisateur (2);
o calculer une ou plusieurs valeurs de variation de température $\delta T_{Dj}$, avec j=1,...M, où M est un nombre entier positif et j le nombre de périodes prédéterminées, et où chaque valeur de variation de température $\delta T_{Dj}$ est obtenue par la soustraction entre la valeur de la température interne $T_{INi}$ au cours d'une période prédéterminée et la valeur de la température interne $T_{INi-1}$ au cours de la période prédéterminée précédente;
o stockage:

les valeurs de la température interne $T_{INi}$ référencées à au moins deux périodes de temps prédéterminées $\Delta t_{REFi}$ et lesdites une ou plusieurs valeurs de variation de température $\delta T_{Dj}$, ainsi que ladite valeur de température $T_U$ et ladite valeur de vitesse $V_U$;
un premier groupe d'ensembles flous F1 comprenant une pluralité d'ensembles flous $F1_1$,$F1_2$...$F1_N$, dont chacun identifie un degré respectif d'appartenance à une valeur de température interne $T_{INi}$;
un deuxième groupe d'ensembles flous F2 comprenant une pluralité d'ensembles flous $F2_1$,$F2_2$...$F2_N$, dont chacun identifie un degré d'appartenance respectif d'une valeur de variation de température $\delta T_{Dj}$;
un troisième groupe d'ensembles flous F3 comprenant une pluralité d'ensembles flous $F3_1$,$F3_2$...$F3_N$, chacun identifiant un degré respectif d'appartenance à un état d'ouverture de la vanne de commande (V);
un quatrième groupe d'ensembles flous F4 comprenant une pluralité d'ensembles flous $F4_1$,$F4_2$...$F4_N$, chacun identifiant un degré d'appartenance respectif d'une valeur de la vitesse du ventilateur (F);
une pluralité de règles déductives prédéterminées qui établissent, sur la base du degré d'appartenance de chaque valeur de température interne $T_{INi}$ et du degré d'appartenance de chaque valeur de variation de température $\delta T_{Dj}$, le degré d'appartenance de l'état d'ouverture de la vanne de régulation (V) et le degré d'appartenance de la vitesse de rotation du ventilateur (F),

o en effectuant une fuzzification respective visée:

chaque valeur de température interne $T_{INi}$ pour obtenir un premier ensemble de données floues $P1_i$ comprenant une pluralité respective de premières données floues $P1_{i1}$, $P1_{i2}$.... $P1_{iN}$, où chaque première donnée floue identifie un degré respectif d'appartenance de ladite valeur de température interne $T_{INi}$, et est obtenue au moyen d'une première équation prédéterminée définie par une pluralité de paramètres; chaque valeur de variation de température $\delta T_{Dj}$ pour obtenir un deuxième ensemble de données floues $P2_i$ comprenant une pluralité respective de deuxièmes données floues $P2_{i1}$, $P2_{i2}$....$P2_{iN}$, où chaque deuxième donnée floue identifie un degré respectif d'appartenance à ladite valeur de variation de température $\delta T_{Dj}$, et est obtenue au moyen d'une deuxième équation prédéterminée définie par une pluralité d'autres paramètres,

o appliquer lesdites règles d'inférence prédéterminées à chaque paire de données floues formée par une première donnée floue $P1_{i1}$,$P1_{i2}$...$P1_{iN}$ et une seconde donnée floue $P2_{i1}$, $P2_{i2}$...$P2_{iN}$ afin d'obtenir un troisième ensemble de données floues $P3_i$ comprenant une pluralité de troisièmes données floues $P3_{i1}$, $P3_{i2}$...$P3_{iN}$, chaque troisième donnée floue identifiant un degré d'appartenance respectif dudit état d'ouverture de la vanne de régulation (V) par rapport à un ensemble de données floues respectif associé à ladite troisième donnée floue dudit troisième ensemble de données floues $P3_i$, et un quatrième ensemble de données floues $P4_i$ comprenant une pluralité de quatrièmes données floues $P4_{i1}$, $P4_{i2}$...$P4_{iN}$, chaque quatrième donnée floue identifiant un degré d'appartenance respectif de ladite valeur de ladite vitesse du ventilateur (F) par rapport à un autre ensemble de données floues respectif associé à ladite quatrième donnée floue dudit quatrième ensemble de données floues $P4_i$,

o la réalisation d'une défuzzification respective visée: Ledit ensemble de données floues associé auxdites troisièmes données floues dudit troisième ensemble de données floues $P3_i$ pour obtenir un premier nombre réel R1 indiquant si la vanne de commande (V) doit être ouverte et dans quelle mesure elle doit être ouverte ou si elle doit être fermée, ledit autre ensemble de données floues associé à ladite quatrième donnée floue dudit quatrième ensemble de données floues $P4_i$ pour obtenir un deuxième nombre réel R2 indiquant la vitesse du ventilateur (F),

○ recevoir au fil du temps une valeur de température interne $T_{INi}$, une valeur de variation de température $\delta T_{Dj}$, une valeur de température $T_U$ et une valeur de vitesse $V_U$ au niveau d'un nœud d'entrée respectif ($N_{IN1}$, $N_{IN2}$, $N_{IN3}$, $N_{IN4}$) dudit réseau neuronal;

○ fournir en sortie les paramètres mis à jour pour ladite première équation prédéterminée à un nœud de sortie respectif de chaque premier groupe de nœuds de sortie dudit réseau neuronal, et les autres paramètres mis à jour pour ladite deuxième équation prédéterminée à un nœud de sortie respectif de chaque deuxième groupe de nœuds de sortie dudit réseau neuronal;

○ insérer lesdits paramètres mis à jour dans ladite première équation prédéterminée pour obtenir une première donnée floue mise à jour $P1_i$ et lesdits autres paramètres mis à jour dans ladite deuxième équation prédéterminée pour obtenir une deuxième donnée floue mise à jour $P2_1$,

○ appliquer lesdites règles inférentielles prédéterminées à chaque paire de données floues formée par une première donnée floue mise à jour $P1_i$ et une deuxième donnée floue mise à jour $P2_i$, de manière à obtenir une troisième donnée floue actualisée $P3_i$ associée à la vanne de commande (V) et une quatrième donnée floue actualisée $P4_i$ associée à la vitesse du ventilateur (F), ainsi qu'à obtenir un premier nombre réel actualisé $R1$ ou un deuxième nombre réel R2, par défuzzification;

○ générer un signal pour commander ladite vanne de commande (V) contenant une information concernant ledit premier nombre réel $R1$ ou ledit premier nombre réel mis à jour $R1$ pour l'ouverture/la fermeture de la vanne de commande (V) et un autre signal pour commander lesdits moyens de réglage (A) contenant une information concernant ledit deuxième nombre réel R2 ou ledit deuxième nombre réel mis à jour R2 pour la vitesse du ventilateur (F).

Fig. 1

Fig. 2

Fig. 3

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2019353377 A1

**Non-patent literature cited in the description**

- **G. M. REVEL** ; **E. SABBATINI** ; **M. ARNESANO**. Development and experimental evaluation of a thermography measurement system for real-time monitoring of comfort and heat rate exchange in the built environment. *Measurement Science and Technology*, 2012, vol. 23 (3)